(19) Europäisches Patentamt / European Patent Office / Office européen des brevets

(11) EP 1 701 995 B1

(12) EUROPÄISCHE PATENTSCHRIFT

(45) Veröffentlichungstag und Bekanntmachung des Hinweises auf die Patenterteilung:
**29.02.2012 Patentblatt 2012/09**

(21) Anmeldenummer: **04804414.3**

(22) Anmeldetag: **30.12.2004**

(51) Int Cl.:
***C08J 7/00*** (2006.01) ***C08J 7/16*** (2006.01)
***C08J 5/00*** (2006.01) ***C08J 5/22*** (2006.01)
***C08G 73/00*** (2006.01) ***C08G 73/18*** (2006.01)
***H01M 8/00*** (2006.01) ***H01M 8/10*** (2006.01)

(86) Internationale Anmeldenummer:
**PCT/EP2004/014829**

(87) Internationale Veröffentlichungsnummer:
**WO 2005/063862 (14.07.2005 Gazette 2005/28)**

(54) **PROTONENLEITENDE MEMBRAN UND DEREN VERWENDUNG**

PROTON-CONDUCTING MEMBRANE AND USE THEREOF

MEMBRANE CONDUCTRICE DE PROTONS ET SON UTILISATION

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **30.12.2003 DE 10361932**

(43) Veröffentlichungstag der Anmeldung:
**20.09.2006 Patentblatt 2006/38**

(73) Patentinhaber: **BASF Fuel Cell Research GmbH**
**67056 Ludwigshafen (DE)**

(72) Erfinder:
- **UENSAL, Oemer**
  **55128 Mainz (DE)**
- **CHRIST, Gunter**
  **65510 Wallrabenstein (DE)**
- **WIRTH, Kathrin**
  **65614 Baselich (DE)**

(74) Vertreter: **Mai, Dörr, Besier**
**Patentanwälte**
**Steuerberater/Wirtschaftsprüfer**
**John-F.-Kennedy-Straße 4**
**65189 Wiesbaden (DE)**

(56) Entgegenhaltungen:
**EP-A- 1 202 365** **WO-A-02/081547**
**WO-A-02/088219** **WO-A-03/022412**
**WO-A-03/074596** **WO-A-03/074597**
**WO-A-03/075389** **WO-A-03/096464**
**US-A- 4 622 276** **US-A- 5 599 639**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft eine neuartige protonenleitende Polymermembran auf Basis von Polyazolen, die aufgrund ihrer hervorragenden chemischen und thermischen Eigenschaften vielfältig eingesetzt werden kann und sich insbesondere als Polymer-Elektrolyt-Membran (PEM) in sogenannten PEM-Brennstoffzellen eignet.

Polyazole wie beispielsweise Polybenzimidazole (®Celazole) sind seit langem bekannt. Die Herstellung derartiger Polybenzimidazole (PBI) erfolgt üblicherweise durch Umsetzung von 3,3',4,4'-Tetraaminobiphenyl mit Isophthalsäure bzw. deren Estern in der Schmelze. Das entstehende Präpolymer erstarrt im Reaktor und wird anschließend mechanisch zerkleinert. Anschließend wird das pulverförmige Präpolymer in einer Festphasen-Polymerisation bei Temperaturen von bis zu 400°C endpolymerisiert und das gewünschte Polybenzimidazole erhalten.

Zur Herstellung von Polymerfolien wird das PBI in einem weiteren Schritt in polaren, aprotischen Lösemitteln wie beispielsweise Dimethylacetamid (DMAc) gelöst und eine Folie mittels klassischer Verfahren erzeugt.

Protonenleitende, d.h. mit Säure dotierte Polyazol-Membranen für den Einsatz in PEM-Brennstoffzellen sind bereits bekannt. Die basischen Polyazol-Folien werden mit konzentrierter Phosphorsäure oder Schwefelsäure dotiert und wirken dann als Protonenleiter und Separatoren in sogenannten Polymerelektrolyt-Membran-Brennstoffzellen (PEM-Brennstoffzellen).

Bedingt durch die hervorragenden Eigenschaften des Polyazol-Polymeren können derartige Polymerelektrolytmembranen - zu Membran-Elektroden-Einheiten (MEE) verarbeitet - bei Dauerbetriebstemperaturen oberhalb 100°C insbesondere oberhalb 120°C in Brennstoffzellen eingesetzt werden. Diese hohe Dauerbetriebstemperatur erlaubt es die Aktivität der in der Membran-Elektroden-Einheit (MEE) enthaltenen Katalysatoren auf Edelmetallbasis zu erhöhen. Insbesondere bei der Verwendung von sogenannten Reformaten aus Kohlenwasserstoffen sind im Reformergas deutliche Mengen an Kohlenmonoxid enthalten, die überlicherweise durch eine aufwendige Gasaufbereitung bzw. Gasreinigung entfernt werden müssen. Durch die Möglichkeit die Betriebstemperatur zu erhöhen, können deutlich höhere Konzentrationen an CO-Verunreinigungen dauerhaft toleriert werden.

Durch Einsatz von Polymer-Elektrolyt-Membranen auf Basis von Polyazol-Polymeren kann zum einen auf die aufwendige Gasaufbereitung bzw. Gasreinigung teilweise verzichtet werden und andererseits die Katalysatorbeladung in der Membran-Elektroden-Einheit reduziert werden. Beides ist für einen Masseneinsatz von PEM-Brennstoffzellen unabdingbare Voraussetzung, da ansonsten die Kosten für ein PEM-Brennstoffzellen-System zu hoch sind.

Aus WO 03/075389 sind Polymermembranen auf Basis von Polyvinylphosphonsäure, welche durch ein Verfahren umfassend die Schritte:

a) Mischen eines Polymeren mit vinylhaltiger Phosphonsäure (Monomere),
b) Bildung eines flächigen Gebildes unter Verwendung der Mischung gemäß Schritt a) auf einem Träger und
c) Polymerisation der in dem flächigen Gebilde gemäß Schritt b) vorhandenen Vinylphosphonsäure,

erhältlich sind, bekannt

Aus WO 03/074596 sind Polymermembranen auf Basis von Polyvinylphosphonsäure, welche durch ein Verfahren umfassend die Schritte:

a) Quellen einer Polymerfolie mit einer vinylhaltigen Phosphonsäure (Monomere),
b) Polymerisation der in Schritt a) eingebrachten Vinylphosphonsäure, erhältlich sind, bekannt.

Aus WO 03/074597 sind Polymermembranen auf Basis von Polyvinylsulfonsäure und gegebenenfalls Polyvinylphosphonsäure, welche durch ein Verfahren umfassend die Schritte:

a) Quellen einer Polymerfolie mit einer vinylhaltigen Sulfonsäure (Monomere) und ggf. vinylhaltigen Phosphonsäure (Monomere),
b) Polymerisation der in Schritt a) eingebrachten Vinylsulfon- und Vinylphosphonsäure,

erhältlich sind, bekannt.

Aus WO 03/096464 sind Polymermembranen, die durch Bestrahlung eines Polymeren und nachfolgende Propf-Polymerisation mit vinylhaltigen Phosphonsäure-Monomeren bzw. vinylhaltigen Sulfonsäure-Monomeren erzeugt werden, bekannt.

Aus WO 02/081547 sind protonenleitende Polymermembranen auf Basis von Polyazolen bekannt, welche durch ein Verfahren umfassend die Schritte

A) Umsetzung von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder von einer oder mehreren aromatischen und/oder heteroaromatischen Diaminocarbonsäuren in der Schmelze bei Temperaturen von bis zu 350°C, vorzugsweise bis zu 300°C,

B) Lösen des gemäß Schritt A) erhaltenen festen Prä-Polymeren in Polyphosphorsäure,

C) Erwärmen der Lösung erhältlich gemäß Schritt B) unter Inertgas auf Temperaturen von bis zu 300°C, vorzugsweise bis zu 280°C unter Ausbildung des gelösten Polyazol-Polymeren,

D) Bilden einer Membran unter Verwendung der Lösung des Polyazol-Polymeren gemäß Schritt C) auf einem Träger und

E) Behandlung der in Schritt D) gebildeten Membran (Hydrolyse) bis diese selbsttragend ist, hergestellt werden.

Aus WO 03/022412 und WO 02/088219 sind Herstellungsvarianten der aus WO 02/081547 bekannten Polymermembranen bekannt.

U.S. Patent 4,622,276 offenbart den Einsatz von organo-Phosphonsäuren als Elektrolyt in Brennstoffzellen, wobei die organo-Phosphonsäuren als Composite eingesetzt werden, d.h. mit Gel-Bildnern wie SiC.

U.S. Patent 5,599,639 offenbart protonenleitende Polymermembranen auf Basis von Polybenzimidazolen, die durch Sulfon- oder Phosphonreste modifiziert sind.

EP-A-1,202,365 offenbart protonenleitende Matrix aus einem porösen Substrat, welches mit einem protonenleitenden Polymermaterial gefüllt ist. Die dort beschriebenen Materialien sind insbesondere für Direkt-Methanol-Brennstoffzellen geeignet.

Die bislang bekannten mit Säure dotierten Polymermembrane auf Basis von Polyazolen zeigen bereits ein günstiges Eigenschaftsprofil. Aufgrund der für PEM-Brennstoffzellen angestrebten Anwendungen, insbesondere im Automobilbereich- und der dezentralen Strom- und Wärmeerzeugung (Stationärbereich), sind diese insgesamt jedoch noch zu verbessern. Darüber hinaus haben die bislang bekannten Polymermembranen einen hohen Gehalt an Dimethylacetamid (DMAc), der mittels bekannter Trocknungsmethoden nicht vollständig entfernt werden kann. In der Patentanmeldung DE-A-10109829 wird eine Polymermembran auf Basis von Polyazolen beschrieben, bei der die DMAc-Kontamination beseitigt wurde.

Aus den Patentanmeldung DE-A-10117686, DE-A-10117687 und DE-A-10114815 sind Polymermembranen auf Basis von Polyazolen bekannt, die aus Polyphosphorsäuren hergestellt werden. Diese Membranen zeigen eine ausgezeichnete Leistung, insbesondere bei Betriebstemperaturen oberhalb von 100°C. Nachteilig an diesen Membranen ist jedoch, daß sie eine relative hohe Überspannung, insbesondere an der Kathode aufweisen.

Aufgabe der vorliegenden Erfindung ist es organische Säure enthaltende Polymermembranen auf Basis von Polyazolen bereitzustellen, die einerseits die anwendungstechnischen Vorteile der Polymermembran auf Basis von Polyazolen aufweisen und andererseits eine gesteigerte spezifische Leitfähigkeit, insbesondere bei Betriebstemperaturen oberhalb von 100°C, aufweisen und zusätzliche eine deutlich niedrigere Überspannung, insbesondere an der Kathode aufweisen.

Wir haben nun gefunden, daß eine protonenleitende Membran auf Basis von Polyazolen erhalten werden kann, wenn die zugrundeliegenden Polyazol-Präpolymere in organischen Phosphonsäureanhydriden suspendiert bzw. gelöst, in eine dünne Form gerakelt und in den organischen Phosphonsäureanhydriden endpolymerisiert wird.

Gegenstand der vorliegenden Erfindung ist eine protonenleitende Polymermembran auf Basis von Polyazolen

Bei den erfindungsgemäß eingesetzten aromatischen und heteroaromatischen Tetra-Amino-Verbindungen handelt es sich vorzugsweise um 3,3',4,4'-Tetraaminobiphenyl, 2,3,5,6-Tetraaminopyridin, 1,2,4,5-Tetraaminobenzol, 3,3',4,4'-Tetraaminodiphenylsulfon, 3,3',4,4'-Tetraaminodiphenylether, 3,3',4,4'-Tetraaminobenzophenon, 3,3',4,4'-Tetraaminodiphenylmethan und 3,3',4,4'-Tetraaminodiphenyldimethylmethan sowie deren Salze, insbesondere deren Mono-, Di-, Tri- und Tetrahydrochloridderivate.

Bei den erfindungsgemäß eingesetzten aromatischen Carbonsäuren handelt es sich um Di-carbonsäuren und Tri-carbonsäuren und Tetra-Carbonsäuren bzw. deren Estern oder deren Anhydride oder deren Säurechloride. Der Begriff aromatische Carbonsäuren umfasst gleichermaßen auch heteroaromatische Carbonsäuren. Vorzugsweise handelt es sich bei den aromatischen Dicarbonsäuren um Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl)hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride. Bei den aromatischen Tri-, tetra-carbonsäuren bzw. deren C1-C20-Alkyl-Ester oder C5-C12-Aryl-Ester oder deren Säureanhydride oder deren Säurechloride handelt es sich bevorzugt um 1,3,5-Benzol-tricarbonsäure (Trimesic acid), 1,2,4-Benzol-tricarbonsäure

(Trimellitic acid), (2-Carboxyphenyl)iminodiessigsäure, 3,5,3'-Biphenyltricarbonsäure, 3,5,4'-Biphenyltricarbonsäure, .

Bei den aromatischen Tetracarbonsäuren bzw. deren C1-C20-Alkyl-Ester oder C5-C12-Aryl-Ester oder deren Säureanhydride oder deren Säurechloride handelt es sich bevorzugt um 3,5,3',5'-biphenyltetracarboxylic acid, 1,2,4,5-Benzoltetracarbonsäure, Benzophenontetracarbonsäure, 3,3',4,4'-Biphenyltetracarbonsäure, 2,2',3,3'-Biphenyltetracarbonsäure, 1,2,5,6-Naphthalintetracarbonsäure, 1,4,5,8-Naphthalintetracarbonsäure.

Bei den erfindungsgemäß eingesetzten heteroaromatischen Carbonsäuren handelt es sich um heteroaromatischen Di-carbonsäuren und Tri-carbonsäuren und Tetra-Carbonsäuren bzw. deren Estern oder deren Anhydride. Als Heteroaromatische Carbonsäuren werden aromatische Systeme verstanden welche mindestens ein Stickstoff, Sauerstoff, Schwefel oder Phosphoratom im Aromaten enthalten. Vorzugsweise handelt es sich um Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure, 2,5-Pyrazindicarbonsäure, 2,4,6-Pyridintricarbonsäure, Benzimidazol-5,6-dicarbonsäure. Sowie deren C1-C20-Alkyl-Ester oder C5-C12-Aryl-Ester, oder deren Säureanhydride oder deren Säurechloride.

Der Gehalt an Tri-carbonsäure bzw. Tetracarbonsäuren (bezogen auf eingesetzte Dicarbonsäure) beträgt zwischen 0 und 30 Mol%, vorzugsweise 0,1 und 20 Mol %, insbesondere 0,5 und 10 Mol-%.

Bei den erfindungsgemäß eingesetzten aromatischen und heteroaromatischen Diaminocarbonsäuren handelt es sich bevorzugt um Diaminobenzoesäure und deren Mono und Dihydrochloridderivate.

Bevorzugt werden in Schritt A) Mischungen von mindestens 2 verschiedenen aromatischen Carbonsäuren einzusetzen. Besonders bevorzugt werden Mischungen eingesetzt, die neben aromatischen Carbonsäuren auch heteroaromatische Carbonsäuren enthalten. Das Mischungsverhältnis von aromatischen Carbonsäuren zu heteroaromatischen Carbonsäuren beträgt zwischen 1:99 und 99:1, vorzugsweise 1:50 bis 50:1.

Bei diesem Mischungen handelt es sich insbesondere um Mischungen von N-heteroaromatischen Di-carbonsäuren und aromatischen Dicarbonsäuren. Nicht limitierende Beispiele dafür sind Isophthalsäure, Terephthalsäure, Phthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure,2,5-Pyrazindicarbonsäure.

Die Prä-Polymerisation gemäß Schritt A) führt bei dem gewählten Temperaturbereich und bei Einsatz von 3,3', 4,4'-Tetraaminobiphenyl (TAB) und Isophthalsäureestern (OR) zur Ausbildung von den korrespondierenden Amiden bzw. Iminen (vgl. nachfolgendes Schema)

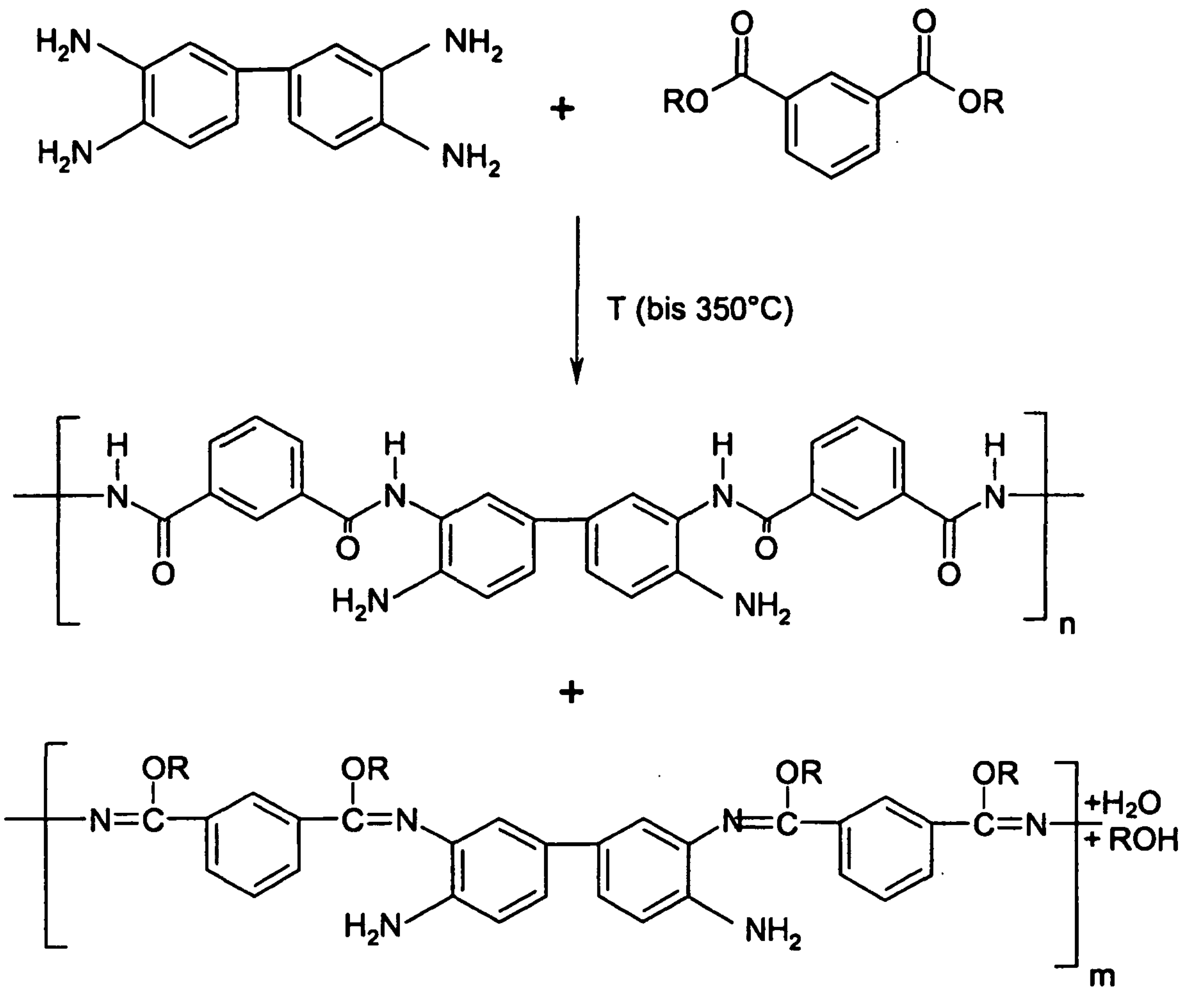


Während der Reaktion verfestigt sich das erhaltene Präpolymer und nach gegebenenfalls nach grober Mahlung in der organischen Phosphonsäure gelöst bzw. suspendiert werden.

Bei den in Schritt B) verwendeten organischen Phosphonsäureanhydriden handelt es sich um cyclische Verbindungen der Formel

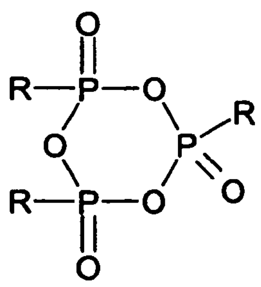

oder um lineare Verbindungen der Formel

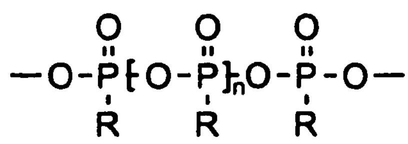

$n \geq 0$

oder um Anhydride der mehrfachen organsichen Phosphonsäuren wie z.B. der Formel von Anhydride der Diphosphonsäure

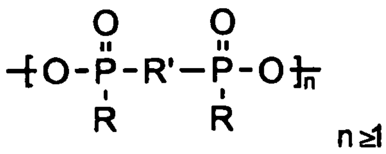

worin der Rest R und R' gleich oder verschieden ist und für eine $C_1$ - $C_{20}$ -kohlenstoffhaltigen Gruppe steht.

Im Rahmen der vorliegenden Erfindung werden unter einer $C_1$ - $C_{20}$ -kohlenstoffhaltigen Gruppe bevorzugt die Reste $C_1$-$C_{20}$-Alkyl, besonders bevorzugt Methyl, Ethyl, n-Propyl, i-Propyl, n-Butyl, i-Butyl, s-Butyl, t-Butyl, n-Pentyl, s-Pentyl, Cyclopentyl, n-Hexyl, Cyclohexyl, n-Octyl oder Cyclooctyl, $C_1$ - $C_{20}$ - Alkenyl, besonders bevorzugt Ethenyl, Propenyl, Butenyl, Pentenyl, Cyclopentenyl, Hexenyl, Cyclohexenyl, Octenyl oder Cyclooctenyl, $C_1$ - $C_{20}$ - Alkinyl, besonders bevorzugt Ethinyl, Propinyl, Butinyl, Pentinyl, Hexinyl oder Octinyl, $C_6$-$C_{20}$-Aryl, besonders bevorzugt Phenyl, Biphenyl, Naphthyl oder Anthracenyl, $C_1$ - $C_{20}$ - Fluoralkyl, besonders bevorzugt Trifluormethyl, Pentafluorethyl oder 2,2,2-Trifluorethyl, $C_6$-$C_{20}$-Aryl, besonders bevorzugt Phenyl, Biphenyl, Naphthyl, Anthracenyl, Triphenylenyl, [1,1';3',1"]Terphenyl-2'-yl, Binaphthyl oder Phenanthrenyl, $C_6$-$C_{20}$-Fluoraryl, besonders bevorzugt Tetrafluorophenyl oder Heptafluoronaphthyl, $C_1$-$C_{20}$-Alkoxy, besonders bevorzugt Methoxy, Ethoxy, n-Propoxy, i-Propoxy, n-Butoxy, 1-Butoxy, s-Butoxy oder t-Butoxy, $C_6$-$C_{20}$-Aryloxy, besonders bevorzugt Phenoxy, Naphthoxy, Biphenyloxy, Anthracenyloxy, Phenanthrenyloxy, $C_7$-$C_{20}$-Arylalkyl, besonders bevorzugt o-Tolyl, m-Tolyl, p-Tolyl, 2,6-Dimethylphenyl, 2,6-Diethylphenyl, 2,6-Di-i-propylphenyl, 2,6-Di-t-butylphenyl, o-t-Butylphenyl, m-t-Butylphenyl, p-t-Butylphenyl, $C_7$-$C_{20}$-Alkylaryl, besonders bevorzugt Benzyl, Ethylphenyl, Propylphenyl, Diphenylmethyl, Triphenylmethyl oder Naphthalinylmethyl, $C_7$-$C_{20}$-Aryloxyalkyl, besonders bevorzugt o-Methoxyphenyl, m-Phenoxymethyl, p-Phenoxymethyl, $C_{12}$-$C_{20}$-Aryloxyaryl, besonders bevorzugt p-Phenoxyphenyl, $C_5$-$C_{20}$-Heteroaryl, besonders bevorzugt 2-Pyridyl, 3-Pyridyl, 4-Pyridyl, Chinolinyl, Isochinolinyl, Acridinyl, Benzochinolinyl oder Benzoisochinolinyl, $C_4$-$C_{20}$-Heterocycloalkyl, besonders bevorzugt Furyl, Benzofuryl, 2-Pyrolidinyl, 2-Indolyl, 3-Indolyl, 2,3-Dihydroindolyl, $C_8$-$C_{20}$-Arylalkenyl, besonders bevorzugt o-Vinylphenyl, m-Vinylphenyl, p-Vinylphenyl, $C_8$-$C_{20}$-Arylalkinyl, besonders bevorzugt o-Ethinylphenyl, m-Ethinylphenyl oder p-Ethinylphenyl, $C_2$ - $C_{20}$ - heteroatomhaltige Gruppe, besonders bevorzugt Carbonyl, Benzoyl, Oxybenzoyl, Benzoyloxy, Acetyl, Acetoxy oder Nitril verstanden, wobei eine oder mehrere $C_1$-$C_{20}$-kohlenstoffhaltige Gruppen ein cyclisches System bilden können.

Bei den vorstehend genannten $C_1$ - $C_{20}$ -kohlenstofl-haltigen Gruppen können ein oder mehrere nicht benachbarte $CH_2$- Gruppen durch -O-, -S-, $-NR^1$- oder $-CONR^2$-ersetzt sein und ein oder mehrere H-Atome können durch F ersetzt sein.

Bei den vorstehend genannten $C_1$ - $C_{20}$ -kohlenstoff-haltigen Gruppen die aromatische Systeme aufweisen können ein oder mehrere nicht benachbarte CH-Gruppen durch -O-, -S-, $-NR^1$- oder $-CONR^2$ ersetzt sein und ein oder mehrere H-Atome können durch F ersetzt sein.

Die Reste $R^1$ und $R^2$ sind gleich oder verschieden bei jedem Auftreten H oder ein aliphatischer oder aromatischer Kohlenwasserstoffrest mit 1 bis 20 C-Atomen.

Besonders bevorzugt sind organische Phosphonsäureanhydride die teil- oder perfluoriert sind.

Die in Schritt B) verwendeten organischen Phosphonsäureanhydride sind kommerziell erhältlich, beispielsweise das Produkt ®T3P (Propan-Phosphonsäureanhydrid) der Firma Clariant.

Die in Schritt B) verwendeten organischen Phosphonsäureanhydride können auch in Kombination mit Polyphosphorsäure und/oder mit $P_2O_5$ eingesetzt werden. Bei der Polyphosphorsäure handelt es sich um handelsübliche Polyphosphorsäuren wie diese beispielsweise von Riedel-de Haen erhältlich sind. Die Polyphosphorsäuren $H_{n+2}P_nO_{3n+1}$ (n>1) besitzen üblicherweise einen Gehalt berechnet als $P_2O_5$ (acidimetrisch) von mindestens 83%. Anstelle einer Lösung der Monomeren kann auch eine Dispersion/Suspension erzeugt werden.

Die in Schritt B) verwendeten organischen Phosphonsäureanhydride können auch in Kombination mit einfachen und oder mehrfachen organischen Phosphonsäuren eingesetzt werden.

Bei den einfachen und oder mehrfachen organischen Phosphonsäuren handelt es sich um Verbindungen der Formel

$R - PO_3H_2$

$H_2O_3P - R - PO_3H_2$

$R [-PO_3H_2]_n$ n>2

worin der Rest R gleich oder verschieden ist und für eine $C_1$ - $C_{20}$ - kohlenstoffhaltigen Gruppe steht.

Im Rahmen der vorliegenden Erfindung werden unter einer $C_1$ - $C_{20}$-kohlenstoffhaltigen Gruppe bevorzugt die Reste $C_1$-$C_{20}$-Alkyl, besonders bevorzugt Methyl, Ethyl, n-Propyl, i-Propyl, n-Butyl, i-Butyl, s-Butyl, t-Butyl, n-Pentyl, s-Pentyl, Cyclopentyl, n-Hexyl, Cyclohexyl, n-Octyl oder Cyclooctyl, $C_6$-$C_{20}$-Aryl, besonders bevorzugt Phenyl, Biphenyl, Naphthyl oder Anthracenyl, $C_1$ - $C_{20}$ - Fluoralkyl, besonders bevorzugt Trifluormethyl, Pentafluorethyl oder 2,2,2-Trifluorethyl, $C_6$-$C_{20}$-Aryl, besonders bevorzugt Phenyl, Biphenyl, Naphthyl, Anthracenyl, Triphenylenyl, [1,1';3',1"]Terphenyl-2'-yl, Binaphthyl oder Phenanthrenyl, $C_6$-$C_{20}$-Fluoraryl, besonders bevorzugt Tetrafluorophenyl oder Heptafluoronaphthyl, $C_1$-$C_{20}$-Alkoxy, besonders bevorzugt Methoxy, Ethoxy, n-Propoxy, i-Propoxy, n-Butoxy, i-Butoxy, s-Butoxy oder t-Butoxy, $C_6$-$C_{20}$-Aryloxy, besonders bevorzugt Phenoxy, Naphthoxy, Biphenyloxy, Anthracenyloxy, Phenanthrenyloxy, $C_7$-$C_{20}$-Arylalkyl, besonders bevorzugt o-Tolyl, m-Tolyl, p-Tolyl, 2,6-Dimethylphenyl, 2,6-Diethylphenyl, 2,6-Di-i-propylphenyl, 2,6-Di-t-butylphenyl, o-t-Butylphenyl, m-t-Butylphenyl, p-t-Butylphenyl, $C_7$-$C_{20}$-Alkylaryl, besonders bevorzugt Benzyl, Ethylphenyl, Propylphenyl, Diphenylmethyl, Triphenylmethyl oder Naphthalinylmethyl, $C_7$-$C_{20}$-Aryloxyalkyl, besonders bevorzugt o-Methoxyphenyl, m-Phenoxymethyl, p-Phenoxymethyl, $C_{12}$-$C_{20}$-Aryloxyaryl, besonders bevorzugt p-Phenoxyphenyl, $C_5$-$C_{20}$-Heteroaryl, besonders bevorzugt 2-Pyridyl, 3-Pyridyl, 4-Pyridyl, Chinolinyl, Isochinolinyl, Acridinyl, Benzochinolinyl oder Benzoisochinolinyl, $C_4$-$C_{20}$-Heterocycloalkyl, besonders bevorzugt Furyl, Benzofuryl, 2-Pyrolidinyl, 2-Indolyl, 3-Indolyl, 2,3-Dihydroindolyl, $C_2$ - $C_{20}$ - heteroatomhaltige Gruppe, besonders bevorzugt Carbonyl, Benzoyl, Oxybenzoyl, Benzoyloxy, Acetyl, Acetoxy oder Nitril verstanden, wobei eine oder mehrere $C_1$-$C_{20}$-kohlenstoffhaltige Gruppen ein cyclisches System bilden können.

Bei den vorstehend genannten $C_1$ - $C_{20}$ -kohlenstoff-haltigen Gruppen können ein oder mehrere nicht benachbarte $CH_2$- Gruppen durch -O-, -S-, $-NR^1-$ oder $-CONR^2$ - ersetzt sein und ein oder mehrere H-Atome können durch F ersetzt sein.

Bei den vorstehend genannten $C_1$ - $C_{20}$ -kohlenstoff-haltigen Gruppen die aromatische Systeme aufweisen können ein oder mehrere nicht benachbarte CH-Gruppen durch -O-, -S-, $-NR^1-$ oder $-CONR^2$ ersetzt sein und ein oder mehrere H-Atome können durch F ersetzt sein.

Die Reste $R^1$ und $R^2$ sind gleich oder verschieden bei jedem Auftreten H oder ein aliphatischer oder aromatischer Kohlenwasserstoffrest mit 1 bis 20 C-Atomen.

Besonders bevorzugt sind organische Phosphonsäuren die teil- oder perfluoriert sind.

Die in Schritt B) verwendeten organischen Phosphonsäuren sind kommerziell erhältlich, beispielsweise die Produkte der Firma Clariant oder Aldrich.

Die in Schritt B) verwendeten organischen Phosphonsäuren umfassen keine vinylhaltigen Phosphonsäuren wie diese in der Patentanmeldung. DE-A-10213540 beschrieben werden.

Die in Schritt B) erzeugte Mischung weist ein Gewichtsverhältnis organische Phosphonsäureanhydride zu Summe aller Monomeren von 1:10000 bis 10000:1, vorzugsweise 1:1000 bis 1000:1, insbesondere 1:100 bis 100:1, auf. Insofern diese Phosphonsäureanhydride im Gemisch mit Polyphosphorsäure oder einfachen und oder mehrfachen organischen Phosphonsäuren eingesetzt werden sind diese bei den Phosphonsäureanhydriden zu berücksichtigen.

Des weiteren können der in Schritt B) erzeugten Mischung weitere organo-Phosphonsäuren, vorzugsweise perfluorierte organische Phosphonsäuren zugesetzt werden. Diese Zugabe kann vor, während und/oder nach den Schritten B) und C) sowie vor Schritt D) erfolgen. Hierdurch kann die Viskosität gesteuert werden.

Die Schichtbildung gemäß Schritt D) erfolgt mittels an sich bekannter Maßnahmen (Gießen, Sprühen, Rakeln) die aus dem Stand der Technik zur Polymerfilm-Herstellung bekannt sind. Als Träger sind alle unter den Bedingungen als inert zu bezeichnenden Träger geeignet. Zur Einstellung der Viskosität kann die Lösung gegebenenfalls mit Phosphorsäure (konz. Phosphorsäure, 85%) versetzt werden. Hierdurch kann die Viskosität auf den gewünschten Wert eingestellt und die Bildung der Membran erleichtert werden.

Die gemäß Schritt D) erzeugte Schicht hat eine Dicke zwischen 20 und 4000 $\mu$m, vorzugsweise zwischen 30 und 3500 $\mu$m, insbesondere zwischen 50 und 3000 $\mu$m.

Das in Schritt C) gebildete Polymere auf Basis von Polyazol enthält wiederkehrende Azoleinheiten der allgemeinen Formel (I) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVII) und/oder (XVIII) und/oder (XIX) und/oder (XX) und/oder (XXI) und/oder (XXII)

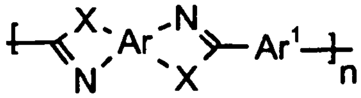

(I)

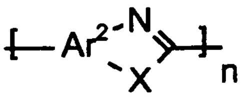
(II)

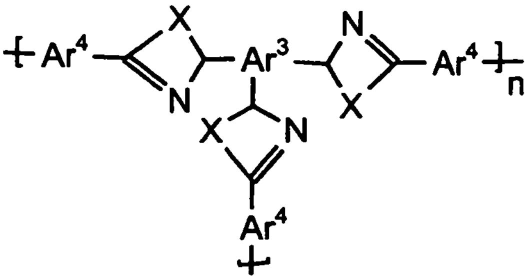
(III)

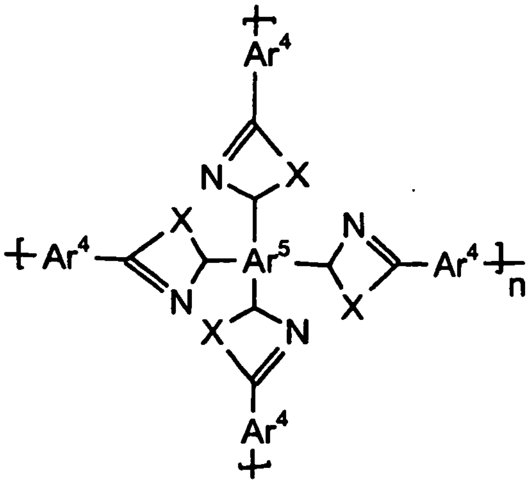
(IV)

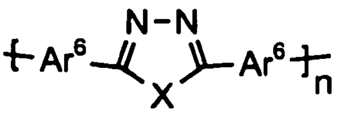
(V)

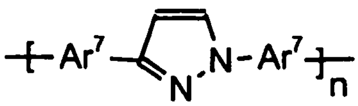
(VI)

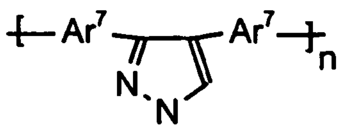
(VII)

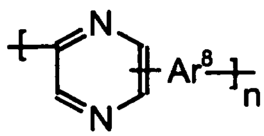
(VIII)

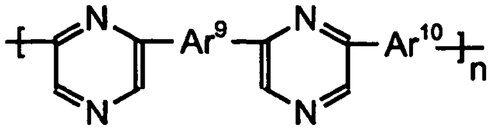

(IX)

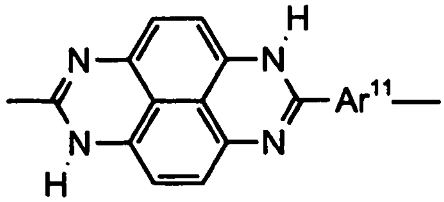

(X)

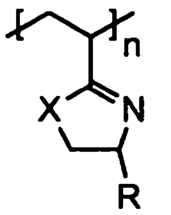

(XI)

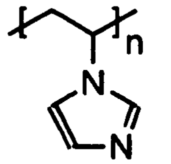

(XII)

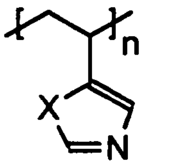

(XIII)

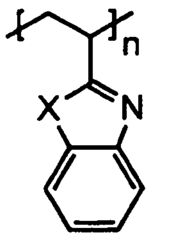

(XIV)

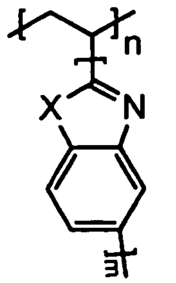

(XV)

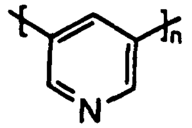

(XVI)

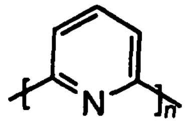

(XVII)

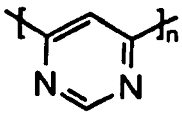

(XVIII)

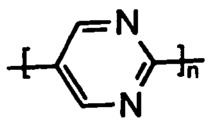

(XIX)

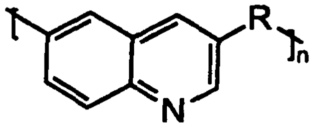

(XX)

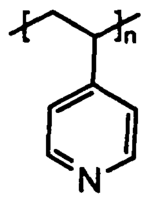

(XXI)

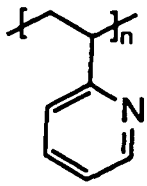

(XXII)

worin

Ar gleich oder verschieden sind und für eine vierbindige aromatische oder heteroaromatische Gruppe, die ein- oder mehrkernig sein kann,

$Ar^1$ gleich oder verschieden sind und für eine zweibindige aromatische oder heteroaromatische Gruppe, die ein- oder mehrkernig sein kann,

$Ar^2$ gleich oder verschieden sind und für eine zwei oder dreibindige aromatische oder heteroaromatische Gruppe, die ein- oder mehrkernig sein kann,

$Ar^3$ gleich oder verschieden sind und für eine dreibindige aromatische oder heteroaromatische Gruppe, die ein- oder mehrkernig sein kann,

$Ar^4$ gleich oder verschieden sind und für eine dreibindige aromatische oder heteroaromatische Gruppe, die ein- oder mehrkernig sein kann,

Ar$^5$ gleich oder verschieden sind und für eine vierbindige aromatische oder heteroaromatische Gruppe, die ein- oder mehrkernig sein kann,

Ar$^6$ gleich oder verschieden sind und für eine zweibindige aromatische oder heteroaromatische Gruppe, die ein- oder mehrkernig sein kann,

Ar$^7$ gleich oder verschieden sind und für eine zweibindige aromatische oder heteroaromatische Gruppe, die ein- oder mehrkernig sein kann,

Ar$^8$ gleich oder verschieden sind und für eine dreibindige aromatische oder heteroaromatische Gruppe, die ein- oder mehrkernig sein kann,

Ar$^9$ gleich oder verschieden sind und für eine zwei- oder drei- oder vierbindige aromatische oder heteroaromatische Gruppe, die ein- oder mehrkernig sein kann,

Ar$^{10}$ gleich oder verschieden sind und für eine zwei- oder dreibindige aromatische oder heteroaromatische Gruppe, die ein- oder mehrkernig sein kann,

Ar$^{11}$ gleich oder verschieden sind und für eine zweibindige aromatische oder heteroaromatische Gruppe, die ein- oder mehrkernig sein kann,

X gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt

R gleich oder verschieden für Wasserstoff, eine Alkylgruppe und eine aromatische Gruppe steht, mit der Maßgabe, das R in Formel (XX) nicht für Wasserstoff steht, und

n, m eine ganze Zahl größer gleich 10, bevorzugt größer gleich 100 ist.

Bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Thiophen, Furan, Pyrrol, Thiazol, Oxazol, Imidazol, Isothiazol, Isoxazol, Pyrazol, 1,3,4-Oxadiazol, 2,5-Diphenyl-1,3,4-oxadiazol, 1,3,4-Thiadiazol, 1,3,4-Triazol, 2,5-Diphenyl-1,3,4-triazol, 1,2,5-Triphenyl-1,3,4-triazol, 1,2,4-Oxadiazol, 1,2,4-Thiadiazol, 1,2,4-Triazol, 1,2,3-Triazol, 1,2,3,4-Tetrazol, Benzo[b]thiophen, Benzo[b]furan, Indol, Benzo[c]thiophen, Benzo[c]furan, Isoindol, Benzoxazol, Benzothiazol, Benzimidazol, Benzisoxazol, Benzisothiazol, Benzopyrazol, Benzothiadiazol, Benzotriazol, Dibenzofuran, Dibenzothiophen, Carbazol, Pyridin, Bipyridin, Pyrazin, Pyrazol, Pyrimidin, Pyridazin, 1,3,5-Triazin, 1,2,4-Triazin, 1,2,4,5-Triazin, Tetrazin, Chinolin, Isochinolin, Chinoxalin, Chinazolin, Cinnolin, 1,8-Naphthyridin, 1,5-Naphthyridin, 1,6-Naphthyridin, 1,7-Naphthyridin, Phthalazin, Pyridopyrimidin, Purin, Pteridin oder Chinolizin, 4H-Chinolizin, Diphenylether, Anthracen, Benzopyrrol, Benzooxathiadiazol, Benzooxadiazol, Benzopyridin, Benzopyrazin, Benzopyrazidin, Benzopyrimidin, Benzotriazin, Indolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren ab, die gegebenenfalls auch substituiert sein können.

Dabei ist das Substitionsmuster von Ar$^1$, Ar$^4$, Ar$^6$, Ar$^7$, Ar$^8$, Ar$^9$, Ar$^{10}$, Ar$^{11}$ beliebig, im Falle vom Phenylen beispielsweise kann Ar$^1$, Ar$^4$, Ar$^6$, Ar$^7$, Ar$^8$, Ar$^9$, Ar$^{10}$, Ar$^{11}$ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Aminogruppen, Hydroxygruppen oder kurzkettige Alkylgruppen wie z. B. Methyl- oder Ethylgruppen.

Bevorzugt sind Polyazole mit wiederkehrenden Einheiten der Formel (I) bei denen die Reste X innerhalb einer wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

Weitere bevorzugte Polyazol-Polymere sind Polyimidazole, Polybenzthiazole, Polybenzoxazole, Polyoxadiazole, Polyquinoxalines, Polythiadiazole Poly(pyridine), Poly(pyrimidine), und Poly(tetrazapyrene).

In einer weiteren Ausführungsform der vorliegenden Erfindung ist das Polymer enthaltend wiederkehrende Azoleinheiten ein Copolymer oder ein Blend, das mindestens zwei Einheiten der Formel (I) bis (XXII) enthält, die sich voneinander unterscheiden. Die Polymere können als Blockcopolymere (Diblock, Triblock), Segmentcopolymere, statistische Copolymere, periodische Copolymere und/oder alternierende Polymere vorliegen.

In einer besonders bevorzugten Ausführungsform der vorliegenden Erfindung ist das Polymer enthaltend wiederkehrende Azoleinheiten ein Polyazol, das nur Einheiten der Formel (I) und/oder (II) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrenden Benzimidazoleinheiten bevorzugt. Einige Beispiele der äußerst zweckmäßigen Polymere enthaltend wiederkehrende Benzimidazoleinheiten werden durch die nachfolgende Formeln wiedergegeben:

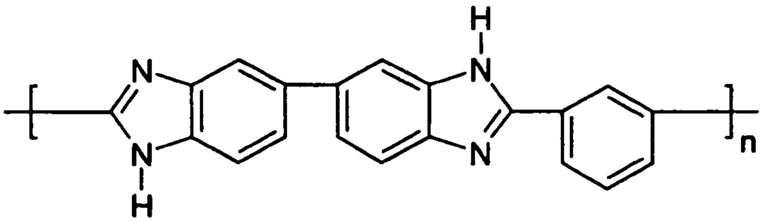

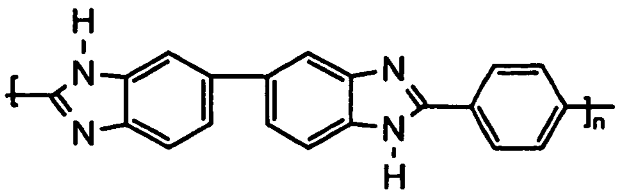

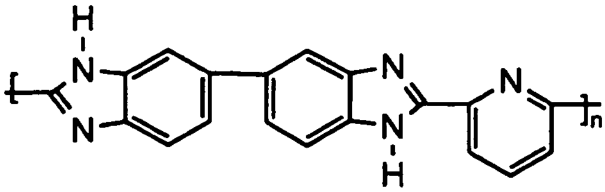

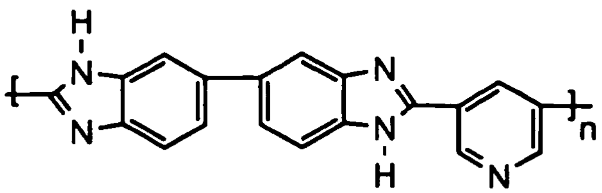

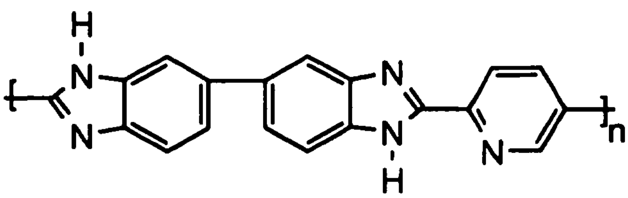

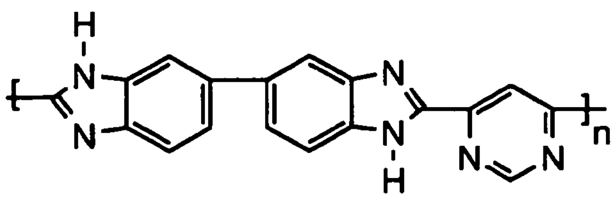

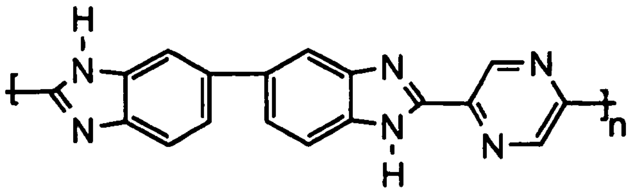

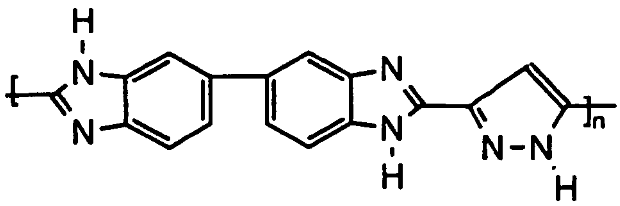

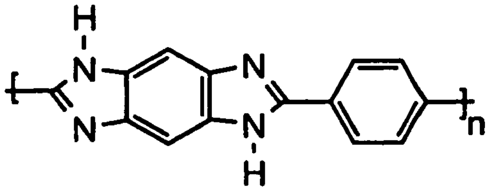

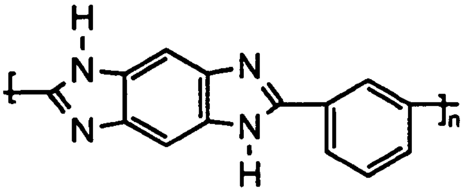

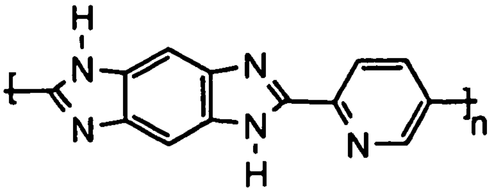

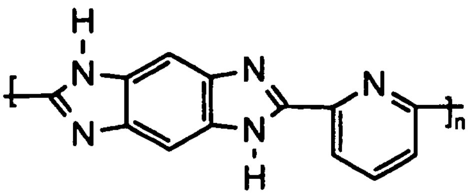

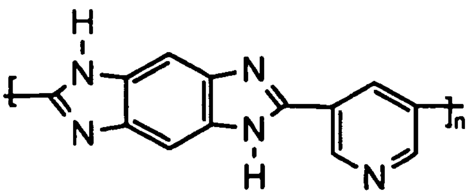

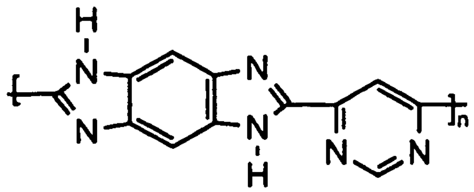

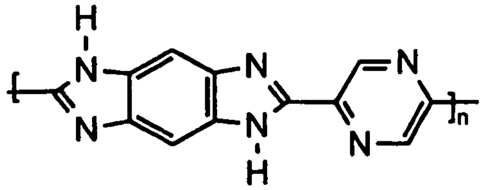

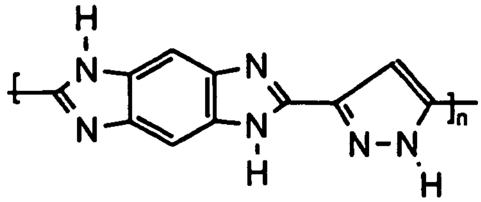

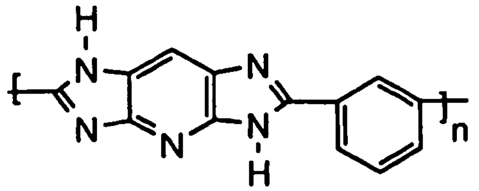

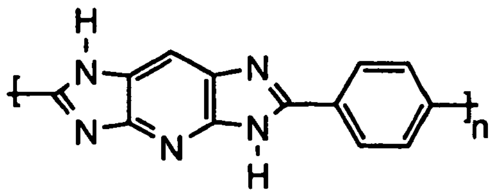

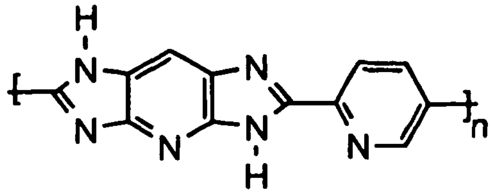

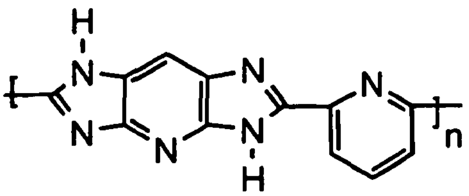

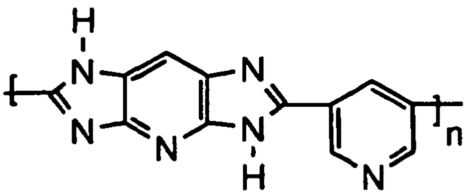

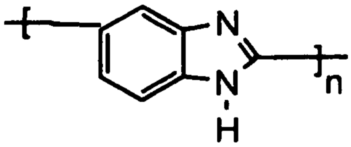

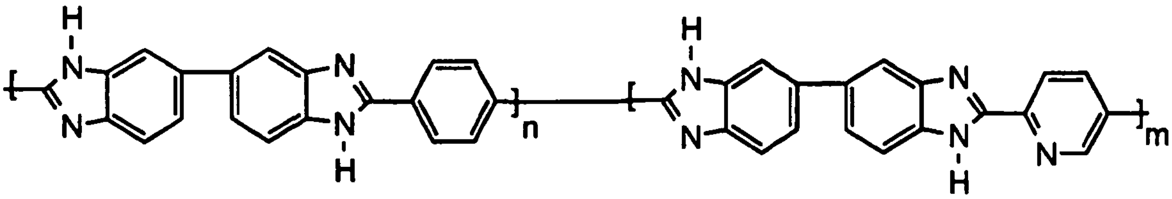

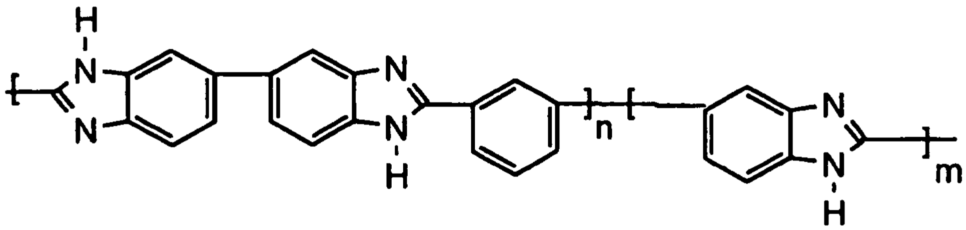

wobei n und m eine ganze Zahl größer gleich 10, vorzugsweise größer gleich 100 ist.

Die mittel des beschriebenen Verfahrens erhältlichen Polyazole, insbesondere jedoch die Polybenzimidazole zeichnen sich durch ein hohes Molekulargewicht aus. Gemessen als Intrinsische Viskosität beträgt diese mindestens 1,4 dl/g und liegt somit deutlich über dem von handelsüblichem Polybenzimidazol (IV < 1,1 dl/g). Insofern die Mischung gemäß Schritt A) auch Tricarbonsäuren bzw. Tetracarbonsäre enthält wird hierdurch eine Verzweigung/ Vernetzung des gebildeten Polymeren erzielt. Diese trägt zur Verbesserung der mechanischen Eigenschaft bei.

Die Behandlung der gemäß Schritt D) erzeugten Polymerschicht in Gegenwart von Feuchtigkeit bei Temperaturen und für eine Dauer bis die Schicht eine ausreichende Festigkeit für den Einsatz in Brennstoffzellen besitzt. Die Behandlung kann soweit erfolgen, daß die Membran selbsttragend ist, so daß sie ohne Beschädigung vom Träger abgelöst werden kann.

Es hat sich weiterhin gezeigt, daß bei Verwendung von aromatischen Dicarbonsäuren (oder heteroaromatischen Dicarbonsäure) wie Isophthalsäure, Terephthalsäure, 2,5-Dihydroxyterephthalsäure, 4,6-Dihydroxyisophthalsäure, 2,6-Dihydroxyisophthalsäure, Diphensäure, 1,8-Dihydroxynaphthalin-3,6-Dicarbonsäure, Diphenylether-4,4'-Dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure oder 2,5-Pyrazindicarbonsäure die Temperatur in Schritt D) - oder falls die Bildung von Oligomeren und/oder niedermolekularen Polymeren bereits in Schritt A) gewünscht wird - im Bereich von bis zu 300°C, vorzugsweise zwischen 100°C und 250°C, günstig ist.

Die Behandlung der Membran in Schritt E) erfolgt bei Temperaturen oberhalb 0°C und kleiner 150°C, vorzugsweise bei Temperaturen zwischen 10°C und 120°C, insbesondere zwischen Raumtemperatur (20°C) und 90°C, in Gegenwart von Feuchtigkeit bzw. Wasser und/oder Wasserdampf bzw. und/oder wasserenthaltende Phosphorsäure von bis zu 85% bzw. und/oder in einer Mischung aus organischen Phosphonsäuren und/oder Sulfonsäuren enthaltenden Mischung in Wasser oder Phosphorsäure. Die Behandlung erfolgt vorzugsweise unter Normaldruck, kann aber auch unter Einwirkung von Druck erfolgen. Wesentlich ist, daß die Behandlung in Gegenwart von ausreichender Feuchtigkeit geschieht, wodurch die anwesende organischen Phosphonsäureanhydriden durch partielle Hydrolyse unter Ausbildung

von organo-Phosphonsäuren und/oder Phosphorsäure (insofern Polyphosphorsäure mit verwendet wurde) zur Verfestigung der Membran beiträgt.

Bei der Hydrolyse der organischen Phosphonsäureanhydriden gebildeten organo-Phosphonsäuren

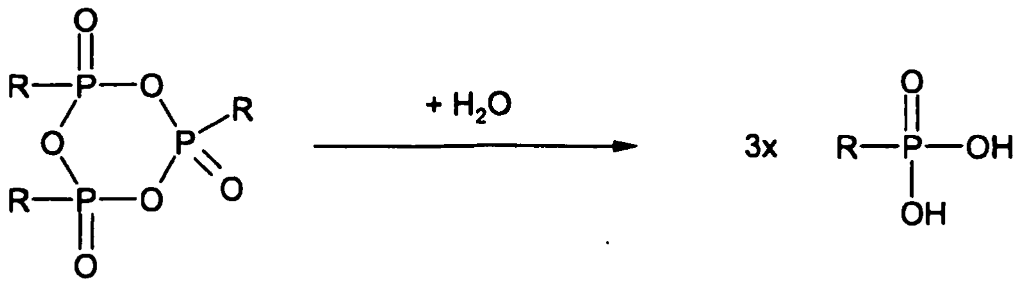


führen zu einer unerwarteten Reduzierung der Überspannung, insbesondere an der Kathode in einer Membran-Elektroden-Einheit die aus der erfindungsgemäßen Membran hergestellt wird.

Die partielle Hydrolyse der organischen Phosphonsäureanhydride in Schritt E) führt zu einer Verfestigung der Membran und zu einer Abnahme der Schichtdicke und Ausbildung einer Membran mit einer Dicke zwischen 15 und 3000 µm, vorzugsweise zwischen 20 und 2000 µm, insbesondere zwischen 20 und 1500 µm, die selbsttragend ist.

Die obere Temperaturgrenze der Behandlung gemäß Schritt E) beträgt in der Regel 150°C. Bei extrem kurzer Einwirkung von Feuchtigkeit, beispielsweise von überhitztem Dampf kann dieser Dampf auch heißer als 150°C sein. Wesentlich für die Temperaturobergrenze ist die Dauer der Behandlung.

Die partielle Hydrolyse (Schritt E) kann auch in Klimakammem erfolgen bei der unter definierter Feuchtigkeitseinwirkung die Hydrolyse gezielt gesteuert werden kann. Hierbei kann die Feuchtigkeit durch die Temperatur bzw. Sättigung der kontaktierenden Umgebung beispielsweise Gase wie Luft, Stickstoff, Kohlendioxid oder andere geeignete Gase, oder Wasserdampf gezielt eingestellt werden. Die Behandlungsdauer ist abhängig von den vorstehend gewählten Parametern.

Weiterhin ist die Behandlungsdauer von der Dicke der Membran abhängig.

In der Regel beträgt die Behandlungsdauer zwischen wenigen Sekunden bis Minuten, beispielsweise unter Einwirkung von überhitztem Wasserdampf, oder bis hin zu ganzen Tagen, beispielsweise an der Luft bei Raumtemperatur und geringer relativer Luftfeuchtigkeit. Bevorzugt beträgt die Behandlungsdauer zwischen 10 Sekunden und 300 Stunden, insbesondere 1 Minute bis 200 Stunden.

Wird die partielle Hydrolyse bei Raumtemperatur (20°C) mit Umgebungsluft einer relativen Luftfeuchtigkeit von 40-80% durchgeführt beträgt die Behandlungsdauer zwischen 1 und 200 Stunden.

Die gemäß Schritt E) erhaltene Membran kann selbsttragend ausgebildet werden, d.h. sie kann vom Träger ohne Beschädigung gelöst und anschließend gegebenenfalls direkt weiterverarbeitet werden.

Über den Grad der Hydrolyse, d.h. die Dauer, Temperatur und Umgebungsfeuchtigkeit, ist die Konzentration an Phosphonsäure und damit die Leitfähigkeit der erfindungsgemäßen Polymermembran einstellbar. Erfindungsgemäß wird die Konzentration der Protonen als Ionenaustauschkapazität angegeben (IEC-Ion exchange capacity). Im Rahmen der vorliegenden Erfindung ist eine IEC von mindestens 2 eq/g, bevorzugt 5 eq/g, besonders bevorzugt 10 eq/g.

Im Anschluß an die Behandlung gemäß Schritt E) kann die Membran durch Einwirken von Hitze in Gegenwart von Luftsauerstoff an der Oberfläche noch vernetzt werden. Diese Härtung der Membranoberfläche verbessert die Eigenschaften der Membran zusätzlich.

Die Vernetzung kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen. Eine weitere Methode ist die Bestrahlung mit ß-Strahlen. Die Strahlungsdosis beträgt hierbei zwischen 5 und 200 kGy.

Die erfindungsgemäße Polymermembran weist verbesserte Materialeigenschaften gegenüber den bisher bekannten dotierten Polymermembranen auf. Insbesondere zeigen sie im Vergleich mit bekannten dotierten Polymermembranen bessere Leistungen. Diese begründet sich insbesondere durch eine verbesserte Protonenleitfähigkeit. Diese beträgt bei Temperaturen von 120°C mindestens 0,1 S/cm, vorzugsweise mindestens 0,11 S/cm, insbesondere mindestens 0,12 S/cm.

Die erfindungsgemäßen Membranen können neben den Polymeren auf Basis von Polyazolen auch weitere Polymere als Blendmaterial beinhalten. Die Blendkomponente hat dabei im Wesentlichen die Aufgabe die mechanischen Eigenschaften zu verbessern und die Materialkosten zu verringern.

Hierzu kann das zusätzliche Blendmaterial während oder nach Schritt A), Schritt B) oder Schritt C) zugegeben werden. Als Blendmaterial kommen Polyethersulfone, insbesondere die in der deutschen Patentanmeldung Nr.

10052242.4 beschriebenen Polyethersulfone, in Betracht. Zu den weiteren Polymeren, die als Blendkomponente eingesetzt werden können, gehören unter anderem Polyolefine, wie Poly(cloropren), Polyacetylen, Polyphenylen, Poly(p-xylylen), Polyarylmethylen, Polyarmethylen, Polystyrol, Polymethylstyrol, Polyvinylalkohol, Polyvinylacetat, Polyvinylether, Polyvinylamin, Poly(N-vinylacetamid), Polyvinylimidazol, Polyvinylcarbazol, Polyvinylpyrrolidon, Polyvinylpyridin, Polyvinylchlorid, Polyvinylidenchlorid, Polytetrafluorethylen, Polyhexafluorpropylen, Copolymere von PTFE mit Hexafluoropropylen, mit Perfluorpropylvinylether, mit Trifluoronitrosomethan, mit Sulfonylfluoridvinylether, mit Carbalkoxyperfluoralkoxyvinylether, Polychlortrifluorethylen, Polyvinylfluorid, Polyvinylidenfluorid, Polyacrolein, Polyacrylamid, Polyacrylnitril, Polycyanacrylate, Polymethacrylimid, Cycloolefinische Copolymere, insbesondere aus Norbornen; Polymere mit C-O-Bindungen in der Hauptkette, beispielsweise Polyacetal, Polyoxymethylen, Polyether, Polypropylenoxid, Polyepichlorhydrin, Polytetrahydrofuran, Polyphenylenoxid, Polyetherketon, Polyester, insbesondere Polyhydroxyessigsäure, Polyethylenterephthalat, Polybutylenterephthalat, Polyhydroxybenzoat, Polyhydroxypropionsäure, Polypivalolacton, Polycaprolacton, Polymalonsäure, Polycarbonat; Polymere C-S-Bindungen in der Hauptkette, beispielsweise Polysulfidether, Polyphenylensulfid, Polyethersulfon; Polymere C-N-Bindungen in der Hauptkette, beispielsweise Polyimine, Polyisocyanide,Polyetherimin, Polyanilin, Polyamide, Polyhydrazide, Polyurethane, Polyimide, Polyazole, Polyazine; Flüssigkristalline Polymere, insbesondere Vectra sowie Anorganische Polymere, beispielsweise Polysilane, Polycarbosilane, Polysiloxane, Polykieselsäure, Polysilikate, Silicone, Polyphosphazene und Polythiazyl.

Zur Anwendung in Brennstoffzellen mit einer Dauergebrauchstemperatur oberhalb 100°C werden solche Blend-Polymere bevorzugt, die eine Glasübergangstemperatur oder Vicat-Erweichungstemperatur VST/A/50 von mindestens 100°C, bevorzugt mindestens 150°C und ganz besonders bevorzugt mindestens 180°C haben. Hierbei sind Polysulfone mit einer Vicat-Erweichungstemperatur VST/A/50 von 180°C bis 230°C bevorzugt.

Zu den bevorzugten Polymeren gehören Polysulfone, insbesondere Polysulfon mit Aromaten in der Hauptkette. Gemäß einem besonderen Aspekt der vorliegenden Erfindung weisen bevorzugte Polysulfone und Polyethersulfone eine Schmelzvolumenrate MVR 300/21,6 kleiner oder gleich 40 $cm^3$/10 min, insbesondere kleiner oder gleich 30 $cm^3$/10 min und besonders bevorzugt kleiner oder gleich 20 $cm^3$/ 10 min gemessen nach ISO 1133 auf.

Gemäß einem besonderen Aspekt kann die Polymermembran mindestens ein Polymer mit aromatischen Sulfonsäuregruppen und/oder Phosphonsäuregruppen umfassen. Aromatische Sulfonsäuregruppen und/oder Phosphonsäuregruppen sind Gruppen, bei denen die Sulfonsäuregruppe ($-SO_3H$) und/oder Phosphonsäuregruppen ($-PO_3H_2$) kovalent an eine aromatischen oder heteroaromatischen Gruppe gebunden ist. Die aromatische Gruppe kann ein Teil der Hauptkette (back bone) des Polymeren oder ein Teil einer Seitengruppe sein, wobei Polymere mit aromatischen Gruppen in der Hauptkette bevorzugt sind. Die Sulfonsäuregruppen und/oder Phosphonsäuregruppen können vielfach auch in Form der Salze eingesetzt werden. Des weiteren können auch Derivate, beispielsweise Ester, insbesondere Methyl- oder Ethylester, oder Halogenide der Sulfonsäuren verwendet werden, die beim Betrieb der Membran in die Sulfonsäure umgesetzt werden.

Bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Thiophen, Furan, Pyrrol, Thiazol, Oxazol, Imidazol, Isothiazol, Isoxazol, Pyrazol, 1,3,4-Oxadiazol, 2,5-Diphenyl-1 ,3,4-oxadiazol, 1,3,4-Thiadiazol, 1,3,4-Triazol, 2,5-Diphenyl-1,3,4-triazol, 1,2,5-Triphenyl-1,3,4-triazol, 1,2,4-Oxadiazol, 1,2,4-Thiadiazol, 1,2,4-Triazol, 1,2,3-Triazol, 1,2,3,4-Tetrazol, Benzo[b]thiophen, Benzo[b]furan, Indol, Benzo[c]thiophen, Benzo[c]furan, Isoindol, Benzoxazol, Benzothiazol, Benzimidazol, Benzisoxazol, Benzisothiazol, Benzopyrazol, Benzothiadiazol, Benzotriazol, Dibenzofuran, Dibenzothiophen, Carbazol, Pyridin, Bipyridin, Pyrazin, Pyrazol, Pyrimidin, Pyridazin, 1,3,5- Triazin, 1,2,4-Triazin, 1,2,4,5-Triazin, Tetrazin, Chinolin, Isochinolin, Chinoxalin, Chinazolin, Cinnolin, 1,8-Naphthyridin, 1,5-Naphthyridin, 1,6-Naphthyridin, 1,7-Naphthyridin, Phthalazin, Pyridopyrimidin, Purin, Pteridin oder Chinolizin, 4H-Chinolizin, Diphenylether, Anthracen, Benzopyrrol, Benzooxathiadiazol, Benzooxadiazol, Benzopyridin, Benzopyrazin, Benzopyrazidin, Benzopyrimidin, Benzotriazin, Indolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren ab, die gegebenenfalls auch substituiert sein können. Bevorzugte Substituenten sind Halogenatome wie z. B. Fluor, Aminogruppen, Hydroxygruppen oder Alkylgruppen.

Dabei ist das Substitionsmuster beliebig, im Falle vom Phenylen beispielsweise kann ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Die mit Sulfonsäuregruppen modifizierten Polymere besitzen vorzugsweise einen Gehalt an Sulfonsäuregruppen im Bereich von 0,5 bis 3 meq/g, vorzugsweise 0,5 bis 2 meq/g. Dieser Wert wird über die sog. Ionenaustauschkapazität (IEC) bestimmt.

Zur Messung der IEC werden die Sulfonsäuregruppen in die freie Säure überführt. Hierzu wird das Polymere

auf bekannte Weise mit Säure behandelt, wobei überschüssige Säure durch Waschen entfernt wird. So wird das sulfonierte Polymer zunächst 2 Stunden in siedendem Wasser behandelt. Anschliessend wird überschüssiges Wasser abgetupt und die Probe während 15 Stunden bei 160°C im Vakkumtrockenschrank bei p<1 mbar getrocknet. Dann wird das Trockengewicht der Membran bestimmt. Das so getrocknete Polymer wird dann in DMSO bei 80°C während 1 h gelöst. Die Lösung wird anschliessend mit 0,1 M NaOH titriert. Aus dem Verbrauch der Säure bis zum Equivalentpunkt und dem Trockengewicht wird dann die Ionenaustauschkapazität (IEC) berechnet.

Polymere mit an aromatische Gruppen kovalent gebundene Sulfonsäuregruppen sind in der Fachwelt bekannt. So können Polymer mit aromatischen Sulfonsäuregruppen beispielsweise durch Sulfonierung von Polymeren hergestellt werden. Verfahren zur Sulfonierung von Polymeren sind in F. Kucera et. al. Polymer Engineering and Science1988, Vol. 38, No 5, 783-792 beschrieben. Hierbei können die Sulfonierungsbedingungen so gewählt werden, dass ein niedriger Sulfonierungsgrad entsteht (DE-A-19959289).

Im Hinblick auf Polymere mit aromatischen Sulfonsäuregruppen, deren aromatische Reste Teil der Seitengruppe sind, sei insbesondere auf Polystyrolderivate verwiesen. So beschreibt die Druckschrift US-A-6110616 Copolymere aus Butadien und Styrol und deren anschließende Sulfonierung zur Verwendung für Brennstoffzellen.

Des weiteren können derartige Polymere auch durch Polyreaktionen von Monomeren erhalten werden, die Säuregruppen umfassen. So können perfluorinierte Polymere wie in US-A-5422411 beschrieben durch Copolymerisation aus Trifluorostyrol und sulfonylmodifiziertem Trifluorostyrol hergestellt werden.

Gemäß einem besonderen Aspekt der vorliegenden Erfindung werden hochtemperaturstabile Thermoplaste eingesetzt, die an aromatische Gruppen gebundene Sulfonsäuregruppen aufweisen. Im allgemeinen weisen derartige Polymere in der Hauptkette aromatische Gruppen auf. So sind sulfonierte Polyetherketone (DE-A-4219077, WO96/01177), sulfonierte Polysulfone (J. Membr. Sci. 83 (1993) p.211) oder sulfoniertes Polyphenylensulfid (DE-A-19527435) bevorzugt.

Die zuvor dargelegten Polymere mit an Aromaten gebundenen Sulfonsäuregruppen können einzeln oder als Mischung eingesetzt werden, wobei insbesondere Mischungen bevorzugt sind, die Polymere mit Aromaten in der Hauptkette aufweisen.

Das Molekulargewicht der Polymere mit an Aromaten gebundenen Sulfonsäuregruppen kann, je nach Art des Polymeren sowie dessen Verarbeitbarkeit in weiten Bereichen liegen. Vorzugsweise liegt das Gewichtsmittel des Molekulargewichts $M_w$ im Bereich von 5000 bis 10 000 000, insbesondere 10000 bis 1000 000, besonders bevorzugt 15 000 bis 50 000. Gemäß einem besonderen Aspekt der vorliegenden Erfindung werden Polymere mit an Aromaten gebundenen Sulfonsäuregruppen, die einen geringen Polydispersitätsindex $M_w/M_n$ aufweisen. Vorzugsweise liegt der Polydispersitätsindex im Bereich 1 bis 5, insbesondere 1 bis 4.

Zur weiteren Verbesserung der anwendungstechnischen Eigenschaften können der Membran zusätzlich noch Füllstoffe, insbesondere protonenleitende Füllstoffe, sowie zusätzliche Säuren zugesetzt werden. Die Zugabe kann entweder während oder nach Schritt A), Schritt B) oder Schritt C) erfolgen

Nicht limitierende Beispiele für Protonenleitende Füllstoffe sind

| | |
|---|---|
| Sulfate wie: | $CsHSO_4$, $Fe(SO_4)_2$, $(NH_4)_3H(SO_4)_2$, $LiHSO_4$, $NaHSO_4$, $KHSO_4$, $RbSO_4$, $LiN_2H_5SO_4$, $NH_4HSO_4$, |
| Phosphate wie | $Zr_3(PO_4)_4$, $Zr(HPO_4)_2$, $HZr_2(PO_4)_3$, $UO_2PO_4.3H_2O$, $H_8UO_2PO_4$, $Ce(HPO_4)_2$, $Ti(HPO_4)_2$, $KH_2PO_4$, $NaH_2PO_4$, $LiH_2PO_4$, $NH_4H_2PO_4$, $CsH_2PO_4$, $CaHPO_4$, $MgHPO_4$, $HsbP_2O_8$, $HSb_3P_2O_{14}$, $H_5Sb_5P_2O_{20}$, |
| Polysäure wie | $H_3PW_{12}O_{40}.nH_2O$ (n=21-29), $H_3SiW_{12}O_{40}.nH_2O$ (n=21-29), $H_xWO_3$, $HSbWO_6$, $H_3PMo_{12}O_{40}$, $H_2Sb_4O_{11}$, $HTaWO_6$, $HNbO_3$, $HTiNbO_5$, $HTiTaO_5$, $HSbTeO_6$, $H_5Ti_4O_9$, $HSbO_3$, $H_2MoO_4$ |
| Selenide und Arsenide wie | $(NH_4)_3H(SeO_4)_2$, $UO_2AsO_4$, $(NH_4)_3H(SeO_4)_2$, $KH_2AsO_4$, $Cs_3H(SeO_4)_2$, $Rb_3H(SeO_4)_2$, |
| Phosphide wie | ZrP, TiP, HfP |
| Oxide wie | $Al_2O_3$, $Sb_2O_5$, $ThO_2$, $SnO_2$, $ZrO_2$, $MoO_3$ |
| Silikate wie | Zeolithe, Zeolithe($NH_4$+), Schichtsilikate, Gerüstsilikate, H-Natrolite, H-Mordenite, $NH_4$-Analcine, $NH_4$-Sodalite, $NH_4$-Gallate, H- Montmorillonite |
| Säuren wie | $HClO_4$, $SbF_5$ |
| Füllstoffe wie | Carbide, insbesondere SiC, $Si_3N_4$, Fasern, insbesondere Glasfasern, Glaspulvern und/oder Polymerfasern, bevorzugt auf Basis von Polyazolen. |

Als weiteres kann diese Membran auch perfluorierte Sulfonsäure Additive (0,1-20 wt%, bevorzugt 0,2-15 wt%, ganz bevorzugt 0,2-10 wt%) enthalten. Diese Additive führen zur Leistungsverbesserung, in der Nähe der Kathode zur

Erhöhung der Sauerstofflöslichkeit und Sauerstoffdiffusion und zur Verringerung der Adsorbtion von Phosphorsäure und Phosphat zu Platin. (Electrolyte additives for phosphoric acid fuel cells. Gang, Xiao; Hjuler, H. A.; Olsen, C.; Berg, R. W.; Bjerrum, N. J.. Chem. Dep. A, Tech. Univ. Denmark, Lyngby, Den. J. Electrochem. Soc. (1993), 140(4), 896-902 und Perfluorosulfonimide as an additive in phosphoric acid fuel cell. Razaq, M.; Razaq, A.; Yeager, E.; DesMarteau, Darryl D.; Singh, S. Case Cent. Electrochem. Sci., Case West. Reserve Univ., Cleveland, OH, USA. J. Electrochem. Soc. (1989), 136(2), 385-90.)

Nicht limitierende Beispiele für persulfonierte Additive sind: Trifluomethansulfonsäure, Kaliumtrifluormethansulfonat, Natriumtrifluormethansulfonat, Lithiumtrifluormethansulfonat, Ammoniumtrifluormethansulfonat, Kaliumperfluorohexansulfonat, Natriumperfluorohexansulfonat, Lithiumperfluorohexansulfonat, Ammoniumperfluorohexansulfonat, Perfluorohexansulfonsäure, Kaliumnonafluorbutansulfonat, Natriumnonafluorbutansulfonat, Lithiumnonafluorbutansulfonat, Ammoniumnonafluorbutansulfonat, Cäsiumnonafluorbutansulfonat, Triethylammoniumperfluorohexasulfonat, Perflurosulfoimide und Nafion.

Als weiteres kann die Membran auch als Additive enthalten, die die im Betrieb bei der Sauerstoffreduktion erzeugten Peroxidradikale abfangen (primäre Anitoxidanzien) oder zerstören (sekundäre Antioxidanzien) und dadurch wie in JP2001118591 A2 beschrieben Lebensdauer und Stabilität der Membran und Membranelektrodeneinheit verbessern. Die Funktionsweise und molekularen Strukturen solcher Additive sind in F. Gugumus in Plastics Additives, Hanser Verlag, 1990; N.S. Allen, M. Edge Fundamentals of Polymer Degradation and Stability, Elsevier, 1992; oder H. Zweifel, Stabilization of Polymeric Materials, Springer, 1998 beschrieben.

Nicht limitierende Beispiele für solche Additive sind:

Bis(trifluormethyl)nitroxid, 2,2-Diphenyl-1-pikrinylhydrazyl, Phenole, Alkylphenole, sterisch gehinderte Alkylphenole wie zum Beispiel Irganox, aromatische Amine, sterisch gehinderte Amine wie zum Beispiel Chimassorb; sterisch gehinderte Hydroxylamine, sterisch gehinderte Alkylamine, sterisch gehinderte Hydroxylamine, sterisch gehinderte Hydroxylaminether, Phosphite wie zum Beispiel Irgafos, Nitrosobenzol, Methyl.2-nitroso-propan, Benzophenon, Benzaldehyd-tert.-butylnitron, Cysteamin, Melanine, Bleioxide, Manganoxide, Nickeloxide, Cobaltoxide.

Zu möglichen Einsatzgebieten der erfindungsgemäßen, dotierten Polymermembranen gehören unter anderem die Verwendung in Brennstoffzellen, bei der Elektrolyse, in Kondensatoren und in Batteriesystemen. Aufgrund ihres Eigenschaftsprofils werden die dotierten Polymermembranen vorzugsweise in Brennstoffzellen verwendet.

Die vorliegende Erfindung betrifft auch eine Membran-Elektroden-Einheit, die mindestens eine erfindungsgemäße Polymermembran aufweist. Für weitere Informationen über Membran-Elektroden-Einheiten wird auf die Fachliteratur, insbesondere auf die Patente US-A-4,191,618, US-A-4,212,714 und US-A-4,333,805 verwiesen. Die in den vorstehend genannten Literaturstellen [US-A-4,191,618, US-A-4,212,714 und US-A-4,333,805] enthaltene Offenbarung hinsichtlich des Aufbaues und der Herstellung von Membran-Elektroden-Einheiten, sowie der zu wählenden Elektroden , Gasdiffusionslagen und Katalysatoren ist auch Bestandteil der Beschreibung.

In einer Variante der vorliegenden Erfindung kann die Membranbildung anstelle auf einem Träger auch direkt auf der Elektrode erfolgen. Die Behandlung gemäß Schritt E) kann hierdurch entsprechend verkürzt werden, da die Membran nicht mehr selbsttragend sein muß. Auch eine solche Membran ist Gegenstand der vorliegenden Erfindung.

Ein weiterer Gegenstand der vorliegenden Erfindung ist eine Elektrode gemäß Anspruch 23.

Die vorstehend beschriebenen Varianten und bevorzugten Ausführungsformen sind auch für diesen Gegenstand gültig, so daß an dieser Stelle auf deren Wiederholung verzichtet wird.

Die Beschichtung hat nach Schritt E) eine Dicke zwischen 2 und 3000 $\mu$m, vorzugsweise zwischen 3 und 2000 $\mu$m, insbesondere zwischen 5 und 1500 $\mu$m hat.

Eine derartig beschichtete Elektrode kann in einer Membran-Elektroden-Einheit, die gegebenenfalls mindestens eine erfindungsgemäße Polymermembran aufweist, eingebaut werden.

Allgemeine Messmethoden:

Messmethode für IEC

Die Leitfähigkeit der Membran hängt stark vom Gehalt an Säuregruppen ausgedrückt durch die sog. Ionenaustauschkapazität (IEC) ab. Zur Messung der Ionenaustauschkapazität wird eine Probe mit einem Durchmesser von 3 cm ausgestanzt und in ein mit 100 ml Wasser gefülltes Becherglas gegeben. Die freigesetzte Säure wird mit 0,1 M NaOH titriert. Anschliessend wird die Probe entnommen, überschüssiges Wasser abgetupft und die Probe bei 160°C während 4h getrocknet. Dann bestimmt man das Trockengewicht, $m_0$, gravimetrisch mit einer Genauigkeit von 0,1 mg. Die Ionenaustauschkapazität wird dann aus dem Verbrauch der 0,1M NaOH bis zum ersten Titrationsendpunkt, $V_1$ in ml, und dem Trockengewicht, $m_0$ in mg, gemäss folgender Formel berechnet:

$$IEC=V_1*300/m_0$$

Messmethode für spezifische Leitfähigkeit

Die spezifische Leitfähigkeit wird mittels Impedanzspektroskopie in einer 4-Pol-Anordnung im potentiostatischen Modus und unter Verwendung von Platinelektroden (Draht, 0,25 mm Durchmesser) gemessen. Der Abstand zwischen den stromabnehmenden Elektroden beträgt 2 cm. Das erhaltene Spektrum wird mit einem einfachen Modell bestehend aus einer parallelen Anordnung eines ohm'schen Widerstandes und eines Kapazitators ausgewertet. Der Probenquerschnitt der phosphorsäuredotierten Membran wird unmittelbar vor der Probenmontage gemessen. Zur Messung der Temperaturabhängigkeit wird die Messzelle in einem Ofen auf die gewünschte Temperatur gebracht und über eine in unmittelbarer Probennähe positioniertes Pt-100 Thermoelement geregelt. Nach Erreichen der Temperatur wird die Probe vor dem Start der Messung 10 Minuten auf dieser Temperatur gehalten.

**Patentansprüche**

1. Protonenleitende Polymermembran auf Basis von Polyazolen erhältlich durch ein Verfahren umfassend die Schritte

   A) Umsetzung von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder von einer oder mehreren aromatischen und/oder heteroaromatischen Diaminocarbonsäuren in der Schmelze bei Temperaturen von bis zu 350°C, vorzugsweise bis zu 300°C,
   B) Lösen des gemäß Schritt A) erhaltenen festen Prä-Polymeren in organischen Phosphonsäureanhydriden, wobei diese keine vinylhaltigen Phosphonsäuren umfassen, unter Ausbildung einer Lösung und/oder Dispersion
   C) Erwärmen der Lösung erhältlich gemäß Schritt B) unter Inertgas auf Temperaturen von bis zu 300°C, vorzugsweise bis zu 280°C unter Ausbildung des gelösten Polyazol-Polymeren.
   D) Bilden einer Membran unter Verwendung der Lösung des Polyazol-Polymeren gemäß Schritt C) auf einem Träger und
   E) Behandlung der in Schritt D) gebildeten Membran in Gegenwart von ausreichender Feuchtigkeit, wodurch anwesende organische Phosphonsäureanhydride durch partielle Hydrolyse unter Ausbildung von organo-Phosphonsäuren und/oder Phosphorsäure, insofern Polyphosphorsäure mit verwendet wurde, zur Verfestigung der Membran beitragen, bis diese selbsttragend ist.

2. Membran gemäß Anspruch 1, **dadurch gekennzeichnet, daß** als aromatische Tetra-Amino-Verbindungen 3,3',4,4'-Tetraaminobiphenyl, 2,3,5,6-Tetraaminopyridin, 1,2,4,5-Tetraaminobenzol, 3,3',4,4'-Tetraaminodiphenylsulfon, 3,3',4,4'-Tetraaminodiphenylether, 3,3',4,4'-Tetraaminobenzophenon, 3,3',4,4'-Tetraaminodiphenylmethan und 3,3',4,4'-Tetraaminodiphenyldimethylmethan

3. Membran gemäß Anspruch 1, **dadurch gekennzeichnet, daß** als aromatische Dicarbonsäuren Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,5-Dihydroxyisophthalsäure, 2,3-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure, 1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl) hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride eingesetzt werden.

4. Membran gemäß Anspruch 1, **dadurch gekennzeichnet, daß** als aromatische Carbonsäure Tri-carbonsäuren, Tetracarbonsäuren bzw. deren C1-C20-Alkyl-Ester oder C5-C12-Aryl-Ester oder deren Säureanhydride oder deren Säurechloride, vorzugsweise 1,3,5-benzene-tricarboxylic acid (trimesic acid); 1,2,4-benzene-tricarboxylic acid (trimellitic acid); (2-Carboxyphenyl)iminodiessigsäure, 3,5,3'-biphenyltricarboxylic acid; 3,5,4'-biphenyltricarboxylic acid und/oder 2,4,6-pyridinetricarboxylic acid eingesetzt werden.

5. Membran gemäß Anspruch 1, **dadurch gekennzeichnet, daß** als aromatische Carbonsäure Tetracarbonsäuren deren C1-C20-Alkyl-Ester oder C5-C12-Aryl-Ester oder deren Säureanhydride oder deren Säurechloride, vorzugsweise Benzol 1,2,4,5-tetracarbonsäuren; Naphthalin-1,4,5,8-tetracarbonsäuren 3,5,3',5'-biphenyltetracarboxylic acid; Benzophenontetracarbonsäure, 3,3',4,4'-Biphenyltetracarbonsäure, 2,2',3,3'-Biphenyltetracarbonsäure, 1,2,5,6-Naphthalintetracarbonsäure, 1,4,5,8-Naphthalintetracarbonsäure eingesetzt werden.

6. Membran gemäß Anspruch 4, **dadurch gekennzeichnet, daß** der Gehalt an Tri-carbonsäure bzw. Tetracarbonsäuren (bezogen auf eingesetzte Dicarbonsäure) beträgt zwischen 0 und 30 Mol-%, vorzugsweise 0,1 und 20 Mol %, insbesondere 0,5 und 10 Mol-%. beträgt.

7. Membran gemäß Anspruch 1, **dadurch gekennzeichnet, daß** als heteroaromatische Carbonsäuren heteroaromatische Di-carbonsäuren und Tri-carbonsäuren und Tetra-Carbonsäuren eingesetzt werden, welche mindestens ein Stickstoff, Sauerstoff, Schwefel oder Phosphoratom im Aromaten enthalten, vorzugsweise Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 - Pyrimidindicarbonsäure,2,5-Pyrazindicarbonsäure, 2,4,6-Pyridintricarbonsäure, Benzimidazol-5,6-dicarbonsäure, sowie deren C1-C20-Alkyl-Ester oder C5-C12-Aryl-Ester, oder deren Säureanhydride oder deren Säurechloride.

8. Membran gemäß Anspruch 1, **dadurch gekennzeichnet, daß** in Schritt B) organische Phosphonsäureanhydride der Formel

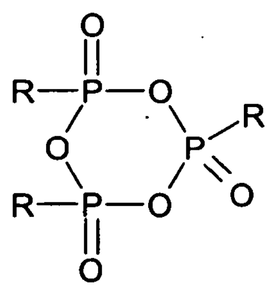

oder um linearen Verbindungen der Formel

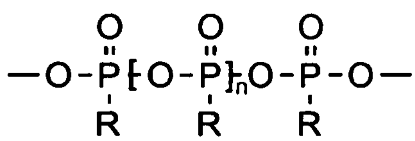

n ≥0

oder um Anhydride der mehrfachen organsichen Phosphonsäuren der Formel

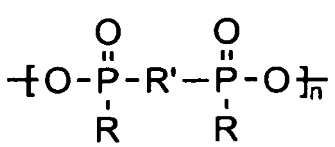

n≥1

worin der Rest R und R' gleich oder verschieden ist und für eine $C_1$ - $C_{20}$ - kohlenstoffhaltigen Gruppe steht.

9. Membran gemäß Anspruch 1, **dadurch gekennzeichnet, daß** in Schritt B) zusätzlich eine Polyphosphorsäure mit einem Gehalt berechnet als $P_2O_5$ (acidimetrisch) von mindestens 83% eingesetzt wird.

10. Membran gemäß Anspruch 1 oder 9, **dadurch gekennzeichnet, daß** in Schritt B) zusätzlich $P_2O_5$ eingesetzt wird.

11. Membran gemäß Anspruch 1, **dadurch gekennzeichnet, daß** in Schritt B) oder Schritt C) eine Lösung oder eine

Dispersion/Suspension erzeugt wird.

**12.** Membran gemäß Anspruch 1, **dadurch gekennzeichnet, daß** in Schritt C) ein Polymere auf Basis von Polyazol enthält wiederkehrende Azoleinheiten der allgemeinen Formel (I) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVII) und/oder (XVIII) und/oder (XIX) und/oder (XX) und/oder (XXI) und/oder (XXII)

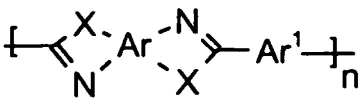
(I)

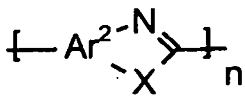
(II)

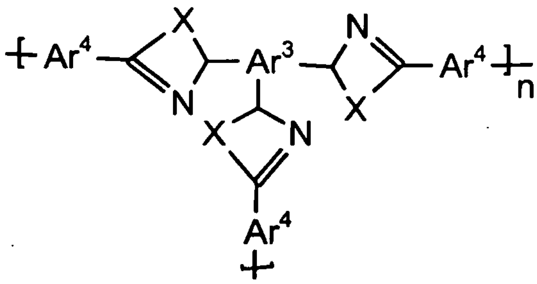
(III)

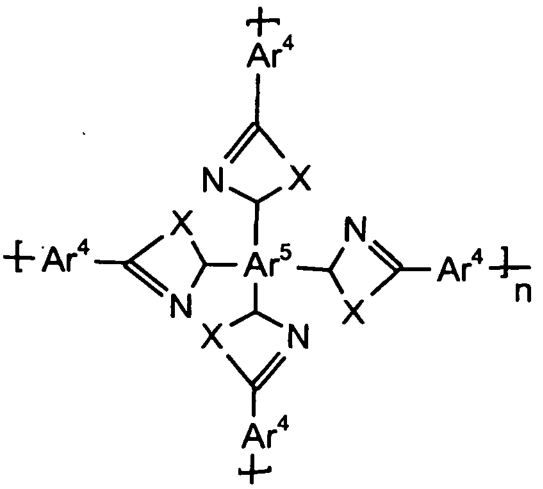
(IV)

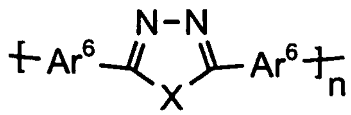
(V)

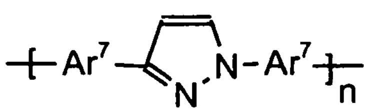
(VI)

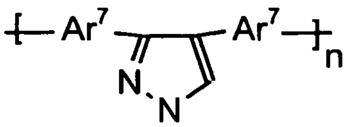

(VII)

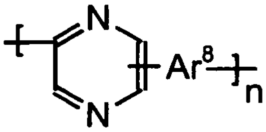

(VIII)

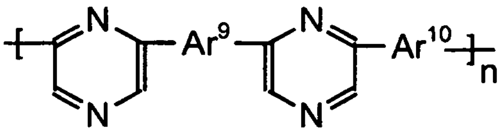

(IX)

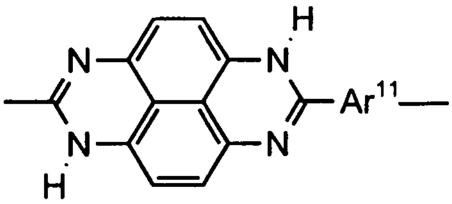

(X)

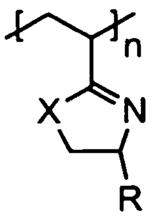

(XI)

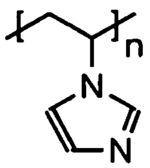

(XII)

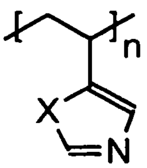

(XIII)

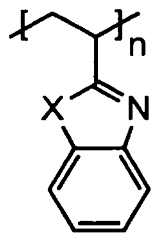

(XIV)

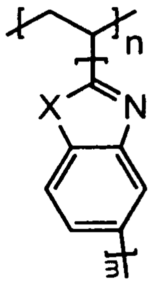

(XV)

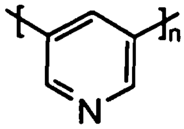

(XVI)

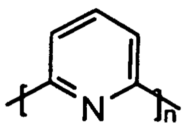

(XVII)

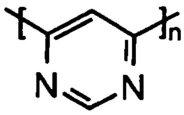

(XVIII)

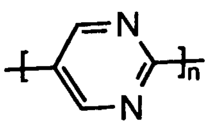

(XIX)

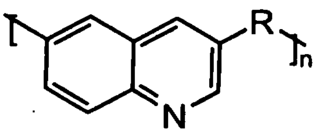

(XX)

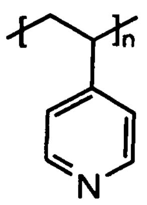

(XXI)

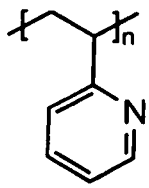

(XXII)

worin

Ar gleich oder verschieden sind und für eine vierbindige aromatische oder heteroaromatische Gruppe, die ein- oder mehrkernig sein kann,
$Ar^1$ gleich oder verschieden sind und für eine zweibindige aromatische oder heteroaromatische Gruppe, die ein- oder mehrkernig sein kann,
$Ar^2$ gleich oder verschieden sind und für eine zwei oder dreibindige aromatische oder heteroaromatische Gruppe, die ein- oder mehrkernig sein kann,
$Ar^3$ gleich oder verschieden sind und für eine dreibindige aromatische oder heteroaromatische Gruppe, die ein- oder mehrkernig sein kann,
$Ar^4$ gleich oder verschieden sind und für eine dreibindige aromatische oder heteroaromatische Gruppe, die ein- oder mehrkernig sein kann,
$Ar^5$ gleich oder verschieden sind und für eine vierbindige aromatische oder heteroaromatische Gruppe, die ein- oder mehrkernig sein kann,
$Ar^6$ gleich oder verschieden sind und für eine zweibindige aromatische oder heteroaromatische Gruppe, die ein- oder mehrkernig sein kann,
$Ar^7$ gleich oder verschieden sind und für eine zweibindige aromatische oder heteroaromatische Gruppe, die ein- oder mehrkernig sein kann,
$Ar^8$ gleich oder verschieden sind und für eine dreibindige aromatische oder heteroaromatische Gruppe, die ein- oder mehrkernig sein kann,
$Ar^9$ gleich oder verschieden sind und für eine zwei- oder drei- oder vierbindige aromatische oder heteroaromatische Gruppe, die ein- oder mehrkernig sein kann,
$Ar^{10}$ gleich oder verschieden sind und für eine zwei- oder dreibindige aromatische oder heteroaromatische Gruppe, die ein- oder mehrkernig sein kann,
$Ar^{11}$ gleich oder verschieden sind und für eine zweibindige aromatische oder heteroaromatische Gruppe, die ein- oder mehrkernig sein kann,
X gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt
R gleich oder verschieden für Wasserstoff, eine Alkylgruppe und eine aromatische Gruppe steht, mit der Maßgabe das R ist Formel (XX) nicht für Wasserstoff steht, und
n, m eine ganze Zahl größer gleich 10, bevorzugt größer gleich 100 ist,

gebildet wird.

**13.** Membran gemäß Anspruch 1, **dadurch gekennzeichnet, daß** in Schritt C) ein Polymer ausgewählt aus der Gruppe Polybenzimidazol, Poly(pyridine), Poly(pyrimidine), Polyimidazole, Polybenzthiazole, Polybenzoxazole, Polyoxadiazole, Polyquinoxalines, Polythiadiazole und Poly(tetrazapyrene) gebildet wird.

**14.** Membran gemäß Anspruch 1, **dadurch gekennzeichnet, daß** in Schritt C) ein Polymer enthaltend wiederkehrende Benzimidazoleinheiten der Formel

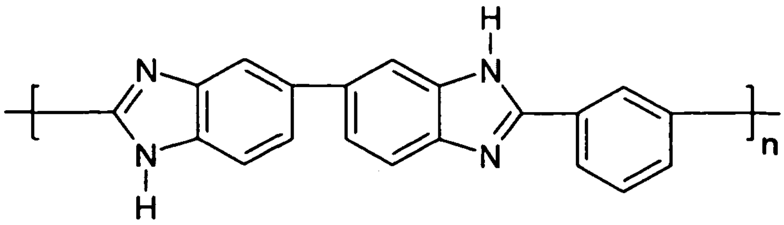

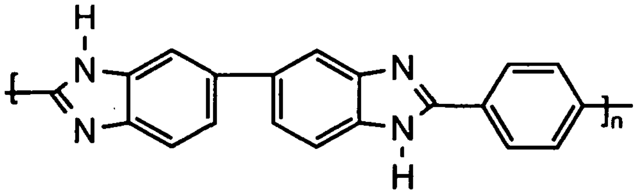

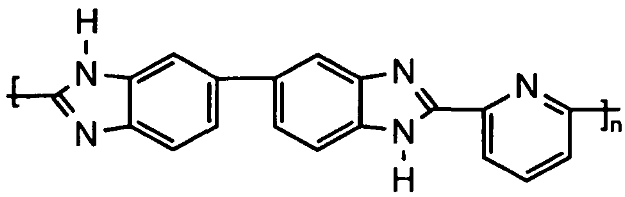

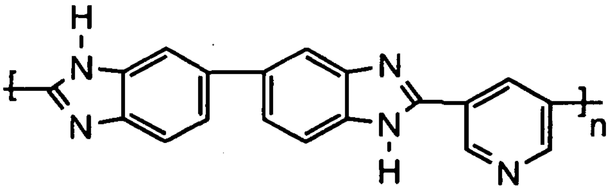

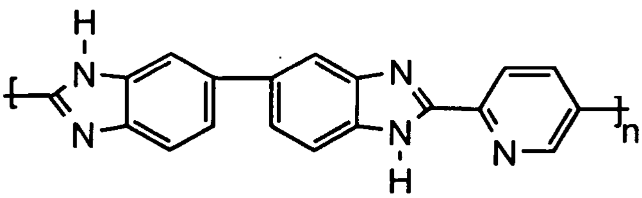

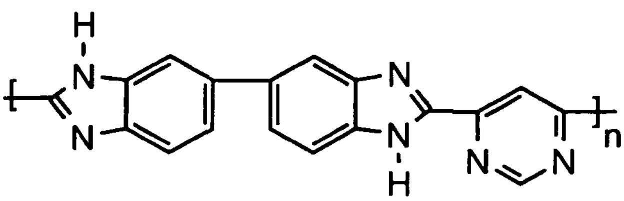

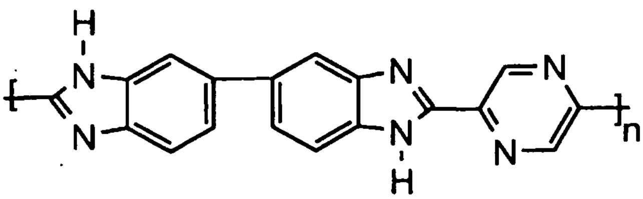

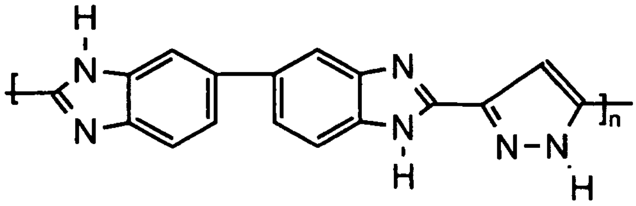

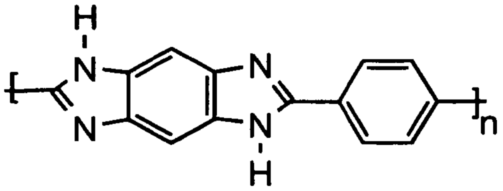

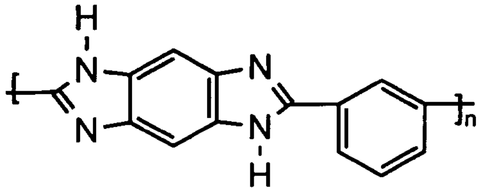

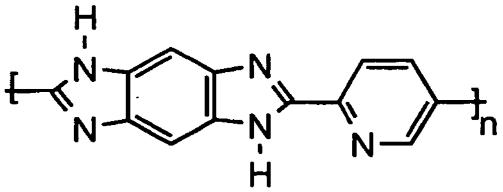

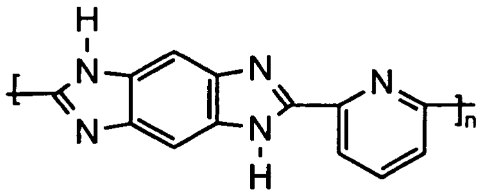

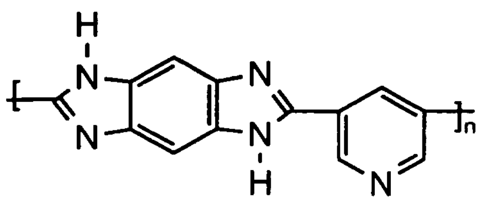

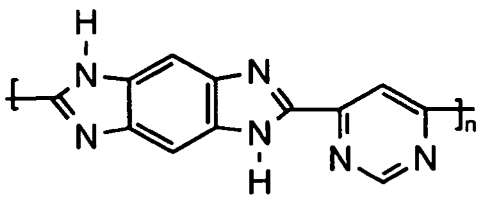

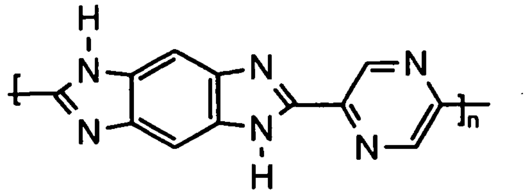

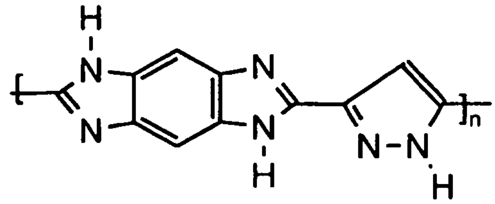

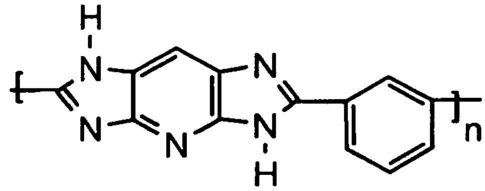

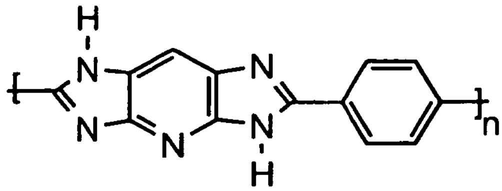

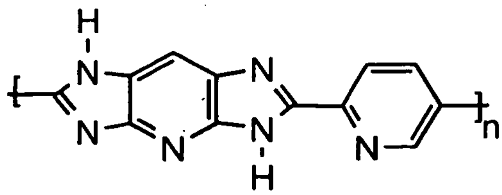

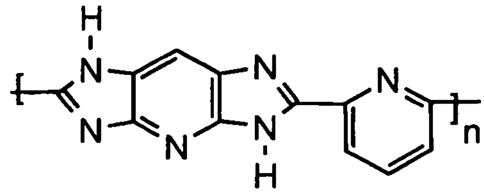

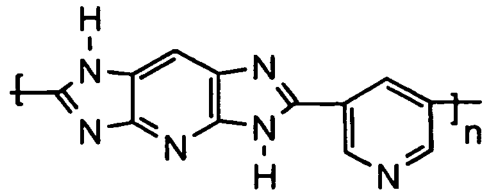

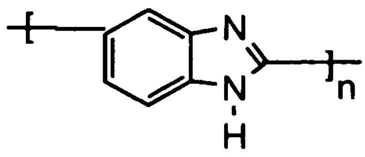

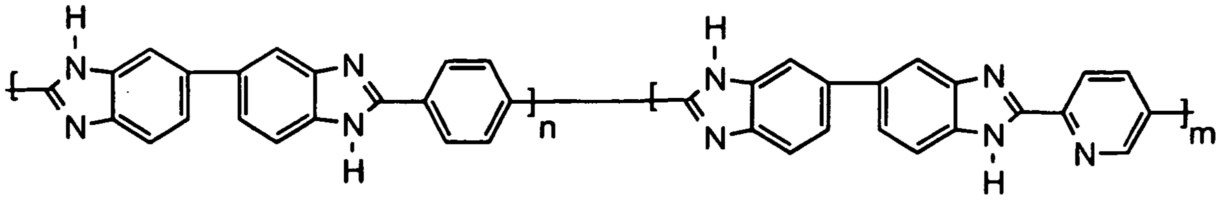

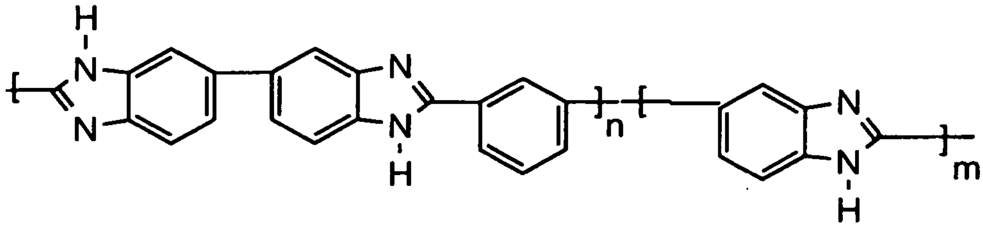

wobei n und m eine ganze Zahl größer gleich 10, vorzugsweise größer gleich 100 ist, gebildet wird.

**15.** Membran gemäß Anspruch 1, **dadurch gekennzeichnet, daß** während oder nach Schritt A), Schritt B) oder Schritt C)ein weiteres Polymer als Blendmaterial zugesetzt wird.

**16.** Membran gemäß Anspruch 1, **dadurch gekennzeichnet, daß** nach Schritt C) und vor Schritt D) die Viskosität durch Zugabe von Phosphorsäure und/oder von organo-Phosphonsäuren eingestellt wird.

**17.** Membran gemäß Anspruch 1, **dadurch gekennzeichnet, daß** die gemäß Schritt E) erzeugten Membran in Gegenwart von Feuchtigkeit bei Temperaturen und für eine Zeitdauer behandelt wird bis die Membran selbsttragend ist und ohne Beschädigung vom Träger abgelöst werden kann.

**18.** Membran gemäß Anspruch 1, **dadurch gekennzeichnet, daß** die Behandlung der Membran in Schritt E) erfolgt bei Temperaturen oberhalb 0°C und bis zu einer Temperatur von 150°C, vorzugsweise bei Temperaturen zwischen 10°C und 120°C, insbesondere zwischen Raumtemperatur (20°C) und 90°C, in Gegenwart von Feuchtigkeit bzw. Wasser und/oder Wasserdampf erfolgt.

**19.** Membran gemäß Anspruch 1, **dadurch gekennzeichnet, daß** die Behandlung der Membran in Schritt E) zwischen 10 Sekunden und 300 Stunden, vorzugsweise 1 Minute bis 200 Stunden, beträgt.

**20.** Membran gemäß Anspruch 1, **dadurch gekennzeichnet daß** in Schritt D) als Träger eine Elektrode gewählt wird und die Behandlung gemäß Schritt E) dergestalt ist, daß die gebildete Membran nicht mehr selbsttragend ist.

**21.** Membran gemäß Anspruch 1, **dadurch gekennzeichnet, daß** in Schritt D) eine Schicht mit einer Dicke von 20 und 4000 μm, vorzugsweise zwischen 30 und 3500 μm, insbesondere zwischen 50 und 3000 μm erzeugt wird.

**22.** Membran gemäß Anspruch 1, **dadurch gekennzeichnet, daß** die in Schritt E) gebildete Membran eine Dicke zwischen 15 und 3000 μm, vorzugsweise zwischen 20 und 2000 μm, insbesondere zwischen 20 und 1500 μm hat.

**23.** Elektrode die mit einer protonenleitenden Polymerbeschichtung auf Basis von Polyazolen erhältlich durch ein Verfahren umfassend die Schritte

A) Umsetzung von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer

enthalten, oder von einer oder mehreren aromatischen und/oder heteroaromatischen Diaminocarbonsäuren in der Schmelze bei Temperaturen von bis zu 350°C, vorzugsweise bis zu 300°C,
B) Lösen des gemäß Schritt A) erhaltenen festen Prä-Polymeren in organischen Phosphonsäureanhydriden, wobei diese keine vinylhaltigen Phosphonsäuren umfassen, unter Ausbildung einer Lösung und/oder Dispersion
C) Erwärmen der Lösung erhältlich gemäß Schritt B) unter Inertgas auf Temperaturen von bis zu 300°C, vorzugsweise bis zu 280°C unter Ausbildung des gelösten Polyazol-Polymeren .
D) Bilden einer Schicht unter Verwendung der Lösung des Polyazol-Polymeren gemäß Schritt C) auf einer Elektrode und
E) Behandlung der in Schritt D) gebildeten Schicht in Gegenwart von ausreichender Feuchtigkeit, wodurch anwesende organische Phosphonsäureanhydride durch partielle Hydrolyse unter Ausbildung von organo-Phosphonsäuren und/oder Phosphorsäure, insofern Polyphosphorsäure mit verwendet wurde, zur Verfestigung beitragen.

**24.** Elektrode gemäß Anspruch 23, wobei die Beschichtung eine Dicke zwischen 2 und 3000 μm, vorzugsweise zwischen 3 und 2000 μm, insbesondere zwischen 5 und 1500 μm hat.

**25.** Membran-Elektroden-Einheit enthaltend mindestens eine Elektrode und mindestens eine Membran gemäß einem oder mehreren der Ansprüche 1 bis 22.

**26.** Membran-Elektroden-Einheit enthaltend mindestens eine Elektrode gemäß Anspruch 23 oder 24 und mindestens eine Membran gemäß einem oder mehreren der Ansprüche 1 bis 22.

**27.** Brennstoffzelle enthaltend eine oder mehrere Membran-Elektroden-Einheiten gemäß Anspruch 25 oder 26.

## Claims

**1.** A proton-conducting polymer membrane based on polyazoles which can be obtained by a process comprising the steps of

A) reacting one or more aromatic tetraamino compounds with one or more aromatic carboxylic acids or their esters which contain at least two acid groups per carboxylic acid monomer, or one or more aromatic and/or heteroaromatic diaminocarboxylic acids in the melt at temperatures of up to 350°C, preferably up to 300°C,
B) Dissolving the solid prepolymer obtained in accordance with step A) in organic phosphonic anhydrides, wherein they comprise no vinyl-containing phosphonic acid, with formation of a solution and/or dispersion,
C) heating the solution obtainable in accordance with step B) under inert gas to temperatures of up to 300°C, preferably up to 280°C, with formation of the dissolved polyazole polymer,
D) forming a membrane using the solution of the polyazole polymer in accordance with step C) on a support and
E) Treatment of the membrane formed in step D) in the presence of sufficient moisture, whereby the organic phosphonic anhydrides present contribute to the solidification of the membrane by means of partial hydrolysis with formation of organophosphonic acids and/or phosphoric acid, until it is self-supporting.

**2.** The membrane according to claim 1, **characterized in that**, as aromatic tetraamino compounds, 3,3',4,4'-tetraaminobiphenyl, 2,3,5,6-tetraaminopyridine, 1,2,4,5-tetraaminobenzene, 3,3',4,4'-tetraaminodiphenyl sulphone, 3,3',4,4'-tetraaminodiphenyl ether, 3,3',4,4'-tetraaminobenzophenone, 3,3',4,4'-tetraaminodiphenylmethane and 3,3',4,4'-tetraaminodiphenyldimethylmethane, are used.

**3.** The membrane according to claim 1, **characterized in that**, as aromatic dicarboxylic acids, isophthalic acid, terephthalic acid, phthalic acid, 5-hydroxyisophthalic acid, 4-hydroxyisophthalic acid, 2-hydroxyterephthalic acid, 5-aminoisophthalic acid, 5-N,N-dimethylaminoisophthalic acid, 5-N,N-diethylaminoisophthalic acid, 2,5-dihydroxyterephthalic acid, 2,5-dihydroxyisophthalic acid, 2,3-dihydroxyphthalic acid, 2,4-dihydroxyphthalic acid, 3,4-dihydroxyphthalic acid, 3-fluorophthalic acid, 5-fluoroisophthalic acid, 2-fluoroterephthalic acid, tetrafluorophthalic acid, tetrafluoroisophthalic acid, tetrafluoroterephthalic acid,1,4-naphthalenedicarboxylic acid, 1,5-naphthalenedicarboxylic acid, 2,6-naphthalenedicarboxylic acid, 2,7-naphthalenedicarboxylic acid, diphenic acid, 1,8-dihydroxynaphthalene-3,6-dicarboxylic acid, diphenyl ether-4,4'-dicarboxylic acid, benzophenone-4,4'-dicarboxylic acid, diphenylsulphone-4,4'-dicarboxylic acid, biphenyl-4,4'-dicarboxylic acid, 4-trifluoromethylphthalic acid, 2,2-bis(4-carboxyphenyl)hexafluoropropane, 4,4'-stilbenedicarboxylic acid, 4-carboxycinnamic acid or their C1-C20 alkyl esters or C5-C12 aryl esters or their acid anhydrides or their acid chlorides are used.

4. The membrane according to claim 1, **characterized in that**, as aromatic carboxylic acid, tricarboxylic acids, tetracarboxylic acids or their C1-C20 alkyl esters or C5-C12 aryl esters or their acid anhydrides or their acid chlorides, preferably 1,3,5-benzenetricarboxylic acid (trimesic acid), 1,2,4-benzenetricarboxylic acid (trimellitic acid); (2-carboxyphenyl)iminodiacetic acid, 3,5,3'-biphenyltricarboxylic acid, 3,5,4'-biphenyltricarboxylic acid and/or 2,4,6-pyridinetricarboxylic acid, are used.

5. The membrane according to claim 1, **characterized in that**, as aromatic carboxylic acid, tetracarboxylic acids, their C1-C20 alkyl esters or C5-C12 aryl esters or their acid anhydrides or their acid chlorides, preferably benzene-1,2,4,5-tetracarboxylic acids; naphthalene-1,4,5,8-tetracarboxylic acids; 3,5,3',5'-biphenyltetracarboxylic acid; benzophenonetetracarboxylic acid, 3,3',4,4'-biphenyltetracarboxylic acid, 2,2',3,3'-biphenyltetracarboxylic acid, 1,2,5,6-naphthalenetetracarboxylic acid, 1,4,5,8-naphthalenetetracarboxylic acid, are used.

6. The membrane according to claim 4, **characterized in that** the content of tricarboxylic acid or tetracarboxylic acids (based on dicarboxylic acid used) is between 0 and 30 mol-%, preferably 0.1 and 20 mol-%, in particular 0.5 and 10 mol-%.

7. The membrane according to claim 1, **characterized in that**, as heteroaromatic carboxylic acids, heteroaromatic dicarboxylic acids and tricarboxylic acids and tetracarboxylic acids are used, which contain at least one nitrogen, oxygen, sulphur or phosphorus atom in the aromatic group, preferably pyridine-2,5-dicarboxylic acid, pyridine-3,5-dicarboxylic acid, pyridine-2,6-dicarboxylic acid, pyridine-2,4-dicarboxylic acid, 4-phenyl-2,5-pyridinedicarboxylic acid, 3,5-pyrazoledicarboxylic acid, 2,6-pyrimidinedicarboxylic acid, 2,5-pyrazinedicarboxylic acid, 2,4,6-pyridinetricarboxylic acid, benzimidazole-5,6-dicarboxylic acid as well as their C1-C20 alkyl esters or C5-C12 aryl esters or their acid anhydrides or their acid chlorides.

8. The membrane according to claim 1, **characterized in that**, in step B), organic phosphonic anhydrides of the formula

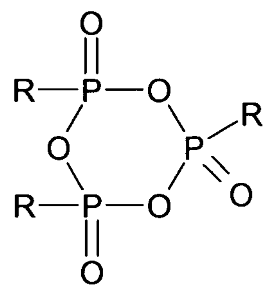

or linear compounds of the formula

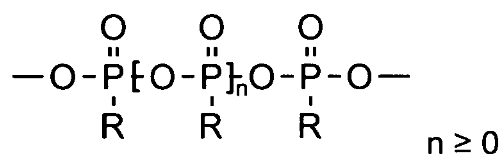

or anhydrides of the multiple organic phosphonic acids of the formula

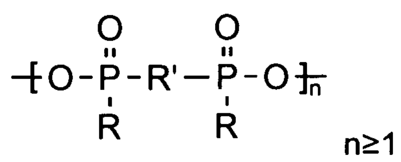

wherein the radicals R and R' are identical or different and represent a $C_1$ -$C_{20}$ carbon-containing group.

9. The membrane according to claim 1, **characterized in that**, in step B), a polyphosphoric acid having a content of

at least 83%, calculated as $P_2O_5$ (by acidimetry), is additionally used.

**10.** The membrane according to claim 1 or claim 9, **characterized in that**, in step B), $P_2O_5$ is additionally used.

**11.** The membrane according to claim 1, **characterized in that**, in step B) or step C), a solution or a dispersion/suspension is produced.

**12.** The membrane according to claim 1, **characterized in that**, in step C), a polymer based on polyazole contains recurring azole units of the general formula (I) and/or (II) and/or (III) and/or (IV) and/or (V) and/or (VI) and/or (VII) and/or (VIII) and/or (IX) and/or (X) and/or (XI) and/or (XII) and/or (XIII) and/or (XIV) and/or (XV) and/or (XVI) and/or (XVI) and/or (XVII) and/or (XVIII) and/or (XIX) and/or (XX) and/or (XXI) and/or (XXII)

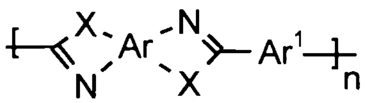

(I)

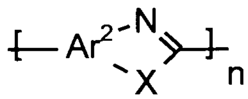

(II)

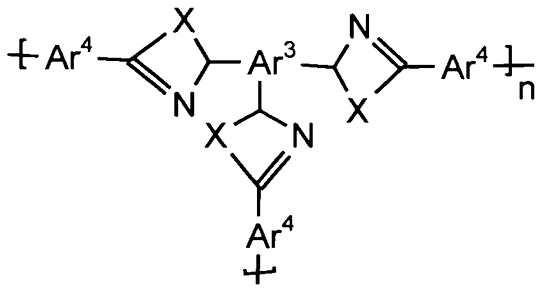

(III)

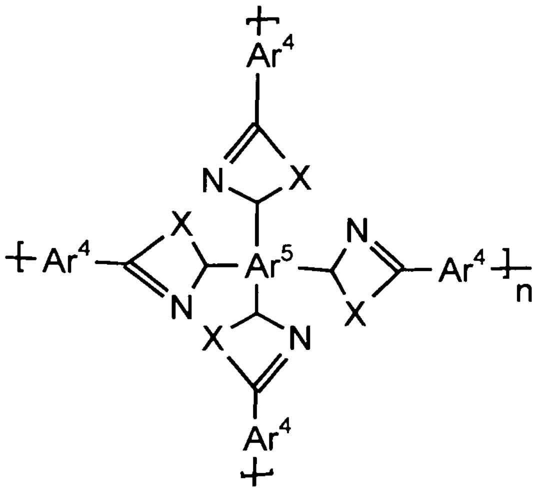

(IV)

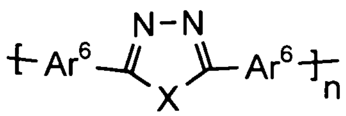

(V)

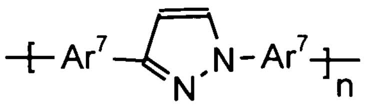

(VI)

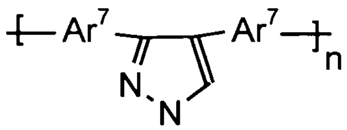

(VII)

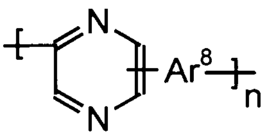

(VIII)

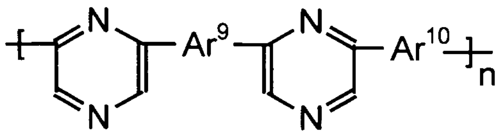

(IX)

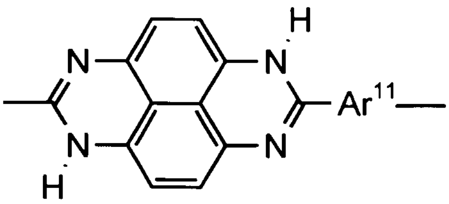

(X)

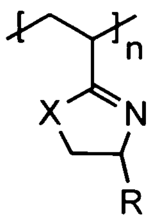

(XI)

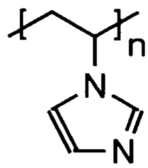

(XII)

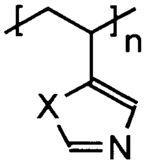

(XIII)

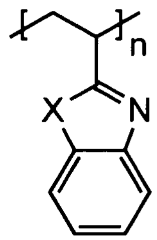

(XIV)

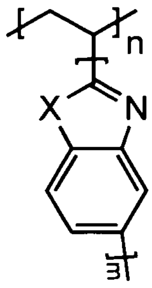

(XV)

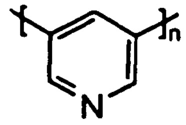

(XVI)

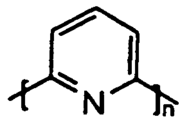

(XVII)

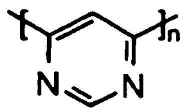

(XVIII)

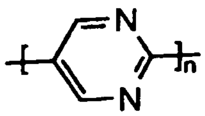

(XIX)

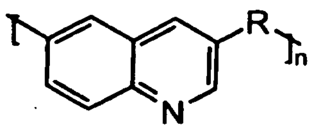

(XX)

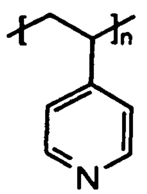

(XXI)

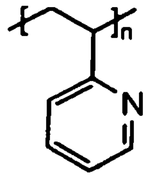

(XXII)

wherein

Ar are identical or different and represent a tetracovalent aromatic or heteroaromatic group, which can be mononuclear or polynuclear,
Ar1 are identical or different and represent a bicovalent aromatic or heteroaromatic group which can be mononuclear or polynuclear,
$Ar^2$ are identical or different and represent a bicovalent or tricovalent aromatic or heteroaromatic group, which can be mononuclear or polynuclear,
Ar3 are identical or different and represent a tricovalent aromatic or heteroaromatic group, which can be mononuclear or polynuclear,
$Ar^4$ are identical or different and represent a tricovalent aromatic or heteroaromatic group, which can be mononuclear or polynuclear,
$Ar^5$ are identical or different and represent a tetracovalent aromatic or heteroaromatic group, which can be mononuclear or polynuclear,
$Ar^6$ are identical or different and represent a bicovalent aromatic or heteroaromatic group, which can be mononuclear or polynuclear,
$Ar^7$ are identical or different and represent a bicovalent aromatic or heteroaromatic group, which can be mononuclear or polynuclear,
$Ar^8$ are identical or different and represent a tricovalent aromatic or heteroaromatic group, which can be mononuclear or polynuclear,
$Ar^9$ are identical or different and represent a bicovalent or tricovalent or tetracovalent aromatic or heteroaromatic group, which can be mononuclear or polynuclear,
$Ar^{10}$ are identical or different and represent a bicovalent or tricovalent aromatic or heteroaromatic group, which can be mononuclear or polynuclear,
$Ar^{11}$ are identical or different and represent a bicovalent aromatic or heteroaromatic group, which can be mononuclear or polynuclear,
X are identical or different and represent oxygen, sulphur or an amino group which carries a hydrogen atom, a group having 1 - 20 carbon atoms, preferably a branched or unbranched alkyl or alkoxy group, or an aryl group as a further radical,
R are identical or different and represent hydrogen, an alkyl group and an aromatic group, with the proviso that R in formula (XX) is not hydrogen, and
n, m are each an integer greater than or equal to 10, preferably greater than or equal to 100,

is formed.

13. The membrane according to claim 1, **characterized in that**, in step C), a polymer selected from the group consisting of polybenzimidazole, poly(pyridines), poly(pyrimidines), polyimidazoles, polybenzothiazoles, polybenzoxazoles, polyoxadiazoles, polyquinoxalines, polythiadiazoles and poly(tetrazapyrenes) is formed.

14. The membrane according to claim 1, **characterized in that**, in step C), a polymer containing recurring benzimidazole units of the formula

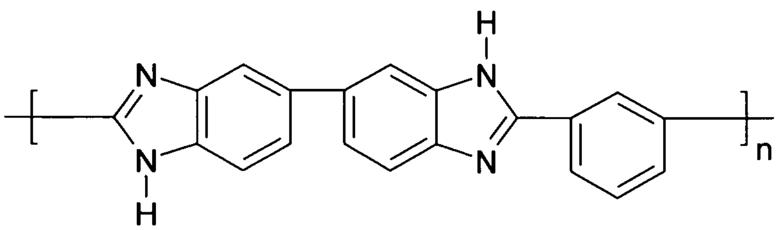

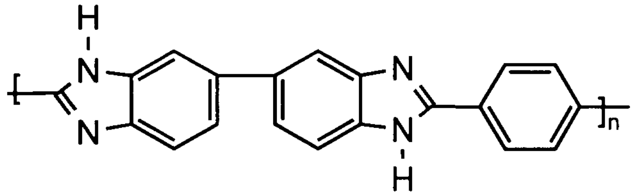

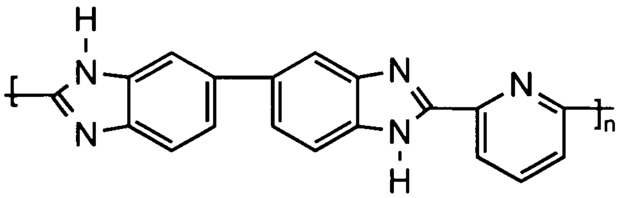

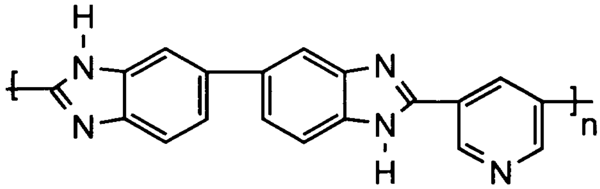

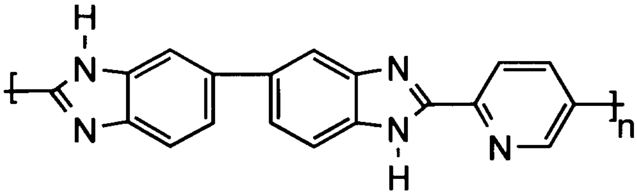

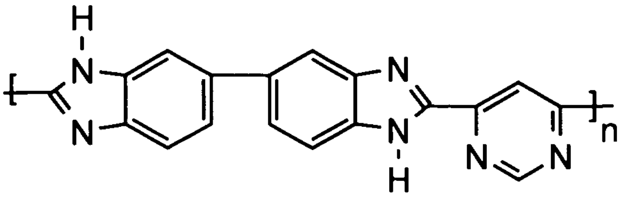

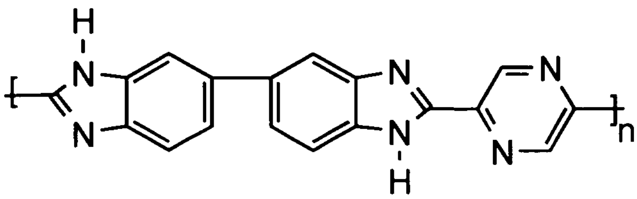

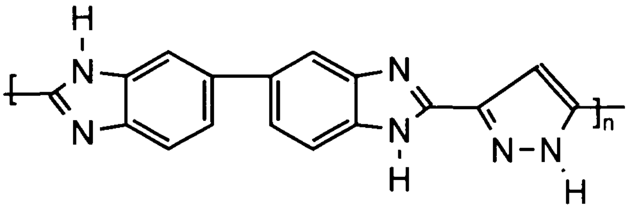

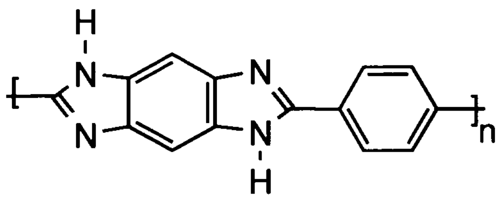

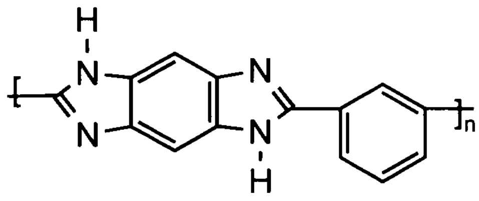

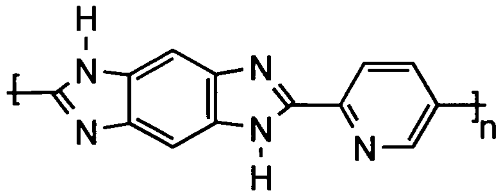

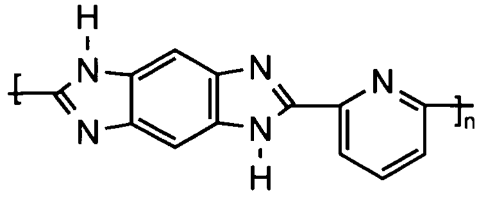

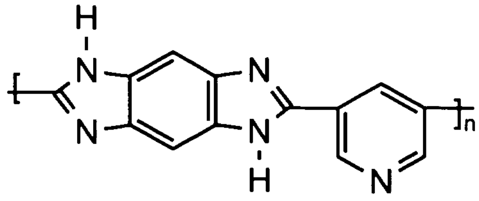

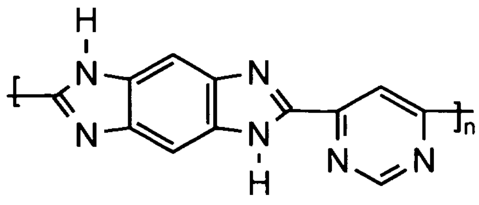

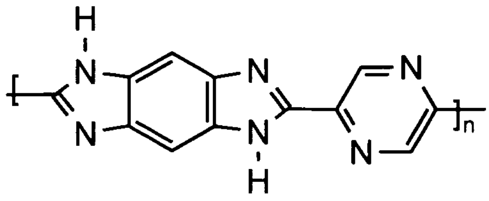

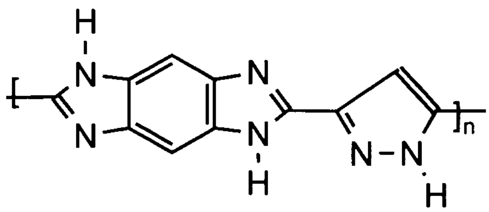

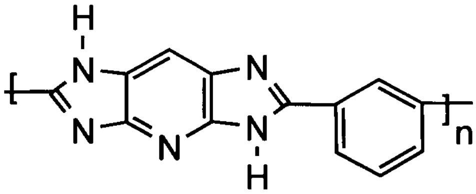

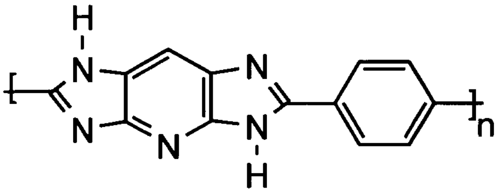

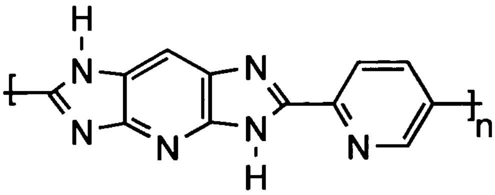

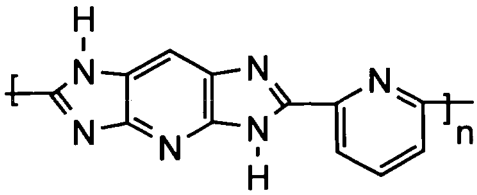

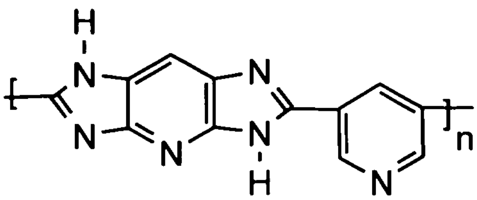

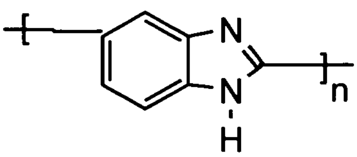

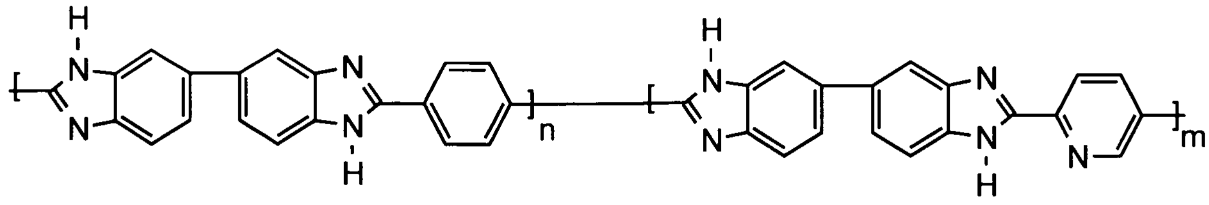

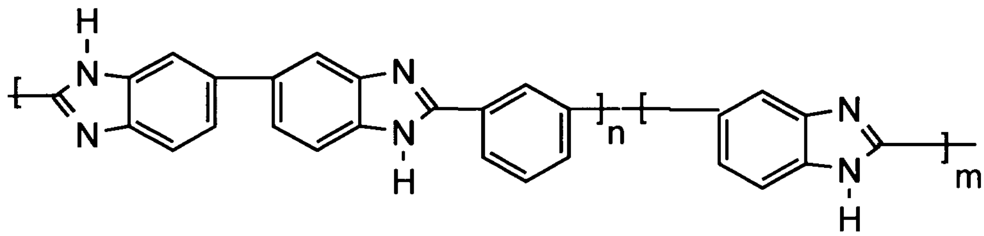

where n and m are each an integer greater than or equal to 10, preferably greater than or equal to 100, is formed.

15. The membrane according to claim 1, **characterized in that**, during or after step A), step B), step C), a further polymer is added as blend material.

16. The membrane according to claim 1, **characterized in that**, after step C) and before step D), the viscosity is adjusted by addition of phosphoric acid and/or organophosphonic acids.

17. The membrane according to claim 1, **characterized in that** the membrane produced in accordance with step E) is treated in the presence of moisture at temperatures and for a period of time until the membrane is self-supporting and can be detached from the support without any damage.

18. The membrane according to claim 1, **characterized in that** the treatment of the membrane in step E) is performed at temperatures of more than 0°C and up to a temperature of 150°C, preferably at temperatures between 10°C and 120°C, in particular between room temperature (20°C) and 90°C, in the presence of moisture or water and/or steam.

19. The membrane according to claim 1, **characterized in that** the treatment of the membrane in step E) is for 10 seconds to 300 hours, preferably 1 minute to 200 hours.

20. The membrane according to claim 1, **characterized in that**, in step D), an electrode is chosen as the support and the treatment in accordance with step E) is such that the membrane formed is no longer self-supporting.

21. The membrane according to claim 1, **characterized in that**, in step D), a layer having a thickness of 20 to 4000 μm, preferably between 30 and 3500 μm, in particular between 50 and 3000 μm, is produced.

22. The membrane according to claim 1, **characterized in that** the membrane formed in step E) has a thickness between 15 and 3000 μm, preferably between 20 and 2000 μm, in particular between 20 and 1500 μm.

23. An electrode having a proton-conducting polymer coating based on polyazoles which can be obtained by a process comprising the steps of

A) reacting one or more aromatic tetraamino compounds with one or more aromatic carboxylic acids or their esters which contain at least two acid groups per carboxylic acid monomer, or one or more aromatic and/or heteroaromatic diaminocarboxylic acids in the melt at temperatures of up to 350°C, preferably up to 300°C,
B) Dissolving the solid prepolymer obtained according to step A) in organic phosphonic anhydrides, wherein they comprise no vinyl-containing phosphonic acid, with formation of a solution and/or dispersion,
C) heating the solution obtainable in accordance with step B) under inert gas to temperatures of up to 300°C, preferably up to 280°C, with formation of the dissolved polyazole polymer,
D) forming a layer using the solution of the polyazole polymer in accordance with step C) on an electrode and
E) Treatment of the layer formed in step D) in the presence of sufficient moisture, whereby the organic phosphonic anhydrides present contribute to solidification by means of partial hydrolysis with formation of organophosphonic

acids and/or phosphoric acid.

**24.** The electrode according to claim 23, wherein the coating has a thickness between 2 and 3000 μm, preferably between 3 and 2000 μm, in particular between 5 and 1500 μm.

**25.** A membrane electrode unit containing at least one electrode and at least one membrane according to one or more of claims 1 to 22.

**26.** The membrane electrode unit containing at least one electrode according to claim 23 or claim 24 and at least one membrane according to one or more of claims 1 to 22.

**27.** A fuel cell containing one or more membrane electrode units according to claim 25 or claim 26.

**Revendications**

**1.** Une membrane de polymère conductrice de protons à base de polyazoles produite par un procédé comprenant les étapes suivantes :

A) Réaction d'un ou plusieurs composés de tétraamine aromatiques avec un ou plusieurs acides carboxyliques aromatiques, ou leurs esters, qui contiennent au moins deux groupes d'acides par monomère d'acide carboxylique, ou bien d'un ou plusieurs acides diaminocarboxyliques aromatiques ou hétéroaromatiques dans la masse en fusion à des températures de plus de 350 °C, préférablement de 300 °C ;
B) Dissolution du prépolymère solide obtenu tel que décrit à l'étape A) dans des hydrides d'acide phosphonique, ceux-ci ne contenant cependant pas d'acides phosphoniques vinyliques, afin de former une solution ou dispersion ;
C) Réchauffement de la solution obtenue à l'étape B) à l'aide de gaz inerte jusqu'à une température de 300 °C, préférablement de 280 °C jusqu'à la dissolution du polymère de polyazole ;
D) Formation d'une membrane en disposant la solution de polymère de polyazone obtenue à l'étape C) sur un support et
E) Traitement de la membrane formée à l'étape D) dans des conditions d'humidité suffisantes par lequel les hydrides d'acide phosphonique hy-drolisés partiellement jusqu'à ce qu'ils forment des acides organophosphoniques ou acides phosphoriques, dans la mesure où de l'acide polyphosphorique a été utilisé, entrainent la solidification de la membrane jusqu'à ce qu'elle soit autoporteuse.

**2.** Membrane selon la revendication 1 **caractérisée en ce que** les composés de tétraamine aromatiques utilisés sont 3,3'4,4'- tétraaminobiphényle, 2,3,5,6 - tétraaminopyridine, 1,2,4,5 - tétraaminobenzol, 3,3'4,4 - tétraaminodiphénylesulfone, 3,3'4,4' - tétraaminodiphényléther, 3,3'4,4' - tétraaminobenzophénon, 3,3'4,4' - tétraaminodiphényleméthane et 3,3'4,4' - tétraaminodiphénylediméthyleméthane.

**3.** Membrane selon la revendication 1 **caractérisée en ce que** les acides dicarboxyliques utilisés sont l'acide isophtalique, acide terephtalique, acide phtalique, acide 5-hydroxyisophtalique, acide 4-acide hydroxyisophtalique, acide 2-hydroxyterephtalique, acide 5-aminoisophtalique, acide 5-N,N-diméthylaminoisophtalique, acide 5-N,N-Diéthylaminoisophtalique, acide 2,5-dihydroxyterephtalique, acide 2,5-dihydroxyisophtalique, acide 2,3- dihydroxyisophtalique, acide 2,3- dihydroxyphtalique, acide 2,4-dihydroxyphtalique, acide 3,4-dihydroxyphtalique, acide 3-fluorophtalique, acide 5-fluorisophtalique, acide 2-fluoroterphtalique, acide tétrafluorophtalique, acide tétrafluoroisophtalique, acide tétrafluoroterephtalique, acide 1,4-naphthalindicarboxylique, acide 1,5-naphtalindicarboxylique, acide 2,6-naphatlindicarboxylique, acide 2,7-naphalindicarboxylique, acide diphénique, acide 1,8-dihydroxynaphtaline, acide 3,6-dicarboxyrique, diphényléther-acide 4,4' dicarboxyrique, benzonphénone-acide 4,4' dicarboxyrique, acide 4-trifluorométhylphtalique, 2,2-Bis(4-carboxyphényle)hexafluoropropane, acide 4,4'-stilbenedicarboxylique, acide 4-carboxycinnamique, ou leurs esters alkyliques en C1-C20 ou esters aryliques en C5-C12, ou leurs anhydrides d'acide ou leurs chlorures d'acide.

**4.** Membrane selon la revendication 1 **caractérisée en ce que** les acides tricarboxylique, acides tétracarboxylique ou leurs esters alkyliques en C1-C20 ou esters aryliques en C5-C12 ou leurs anhydrides d'acide ou leurs chlorures d'acide, de préférences acide 1,3,5-benzène-tricarboxylique (acide trimésique); acide 1,2,4-benzène-tricarboxylique (acide trimellitique); (2-carboxyphényle) acide iminodiacétique, acide 3,5,3'-biphényltricarboxylique; acide 3,5,4'-biphényltricarboxylique ou acide 2,4,6-pyridinetricarboxylique sont utilisés comme acides carboxyliques aromatiques.

5. Membrane selon la revendication 1 **caractérisée en ce que** des acides tétracarboxyliques ou leurs esters alkyliques en C1-C20 ou leurs esters aryliques en C5-C12 ou leurs anhydrides d'acide ou leurs chlorures d'acide, de préférence benzol l'acide 1,2,4,5-tétracarboxyliques; naphtaline- l'acide-1,4,5,8 tétracarboxyliques l'acide 3,5,3',5' biphényltétracarboxylique; l'acide benzophénonetetracarboxylique, l'acide 1,2,5,6-naphtalinetétracarboxylique, l'acide 2,2'3,3'-biphényltétracarboxylique, l'acide 1,2,5,6-naphtalinetétracarboxylique, l'acide 1,4,5,8-naphtalinetétracarboxylique sont utilisés en tant qu'acides carboxyliques aromatiques.

6. Membrane selon la revendication 4 **caractérisée en ce que** le contenu en acide tricarboxylique ou acide tétracarboxyliques (en rapport avec l'acide dicarboxylique utilisé) comprend de 0 à 30 % mol., de préférence 0,1 et 20 % mol., plus particulièrement 0,5 à 10 % mol.

7. Membrane selon la revendication 1 **caractérisée en ce qu'**elle utilise les acides carboxyliques hétéroaromatiques suivants : l'acide dicarboxylique hétéroaromatique et l'acide tricarboxylique et l'acide tétracarboxylique, qui contiennent au moins un nitrogène, un oxygène, un sulfure ou un atome de phosphore dans l'aromatique, de préférence de la pyridine-acide-2,5-dicarboxylique, pyridine-acide 3,5 dicarboxyrique, pyridine-acide 2,6 dicarboxyrique, pyridine-acide 2,4-dicarboxyrique, 4-phényle-acide 2,5-pyridinedicarboxylique, acide 3,5-pyrazoldicarboxylique, acide 2,6-pyrimidinedicarboxylique, acide 2,5-pyrazinedicarboxylique, acide 2,4,6-pyridinetricarboxylique, benzimidazole-acide 5,6 dicarboxyrique, en plus leurs esters akyliques en C1-C20 ou leurs esters aryliques en C5-C12 ou leurs anhydrides d'acide ou leurs chlorures d'acide

8. Membrane selon la revendication 1 **caractérisée en ce que** les anhydrides organiques d'acide phosphoré obtenus à l'étape B) ont la formule :

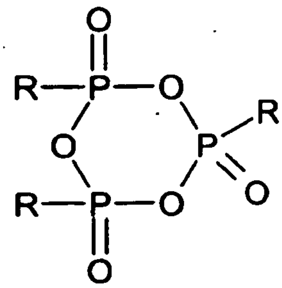

ou en tant que composés linéaires, la formule :

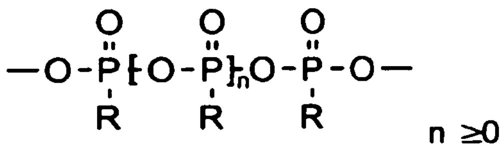

ou en tant qu'anhydrides de multiples acides organiques de phosphore, la formule :

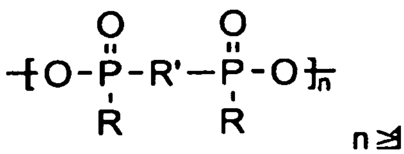

où le reste R ou R' est semblable ou différend et signifie un groupe d'une teneur en carbone de $C_1$ à $C_{20}$.

9. Membrane selon la revendication 1 **caractérisée en ce que**, à l'étape B), un acide polyphosphorique d'un contenu exprimé en $P_2O_5$ (acidimétrique) d'au moins 83 % est rajouté en plus.

**10.** Membrane selon les revendications 1 ou 9 **caractérisée en ce que** du $P_2O_5$ est rajouté en plus à l'étape B).

**11.** Membrane selon la revendication 1 **caractérisée en ce qu'**une solution ou une dispersion/suspension est engendrée à l'étape B) ou C).

**12.** Membrane selon la revendication 1 **caractérisée en ce que**, à l'étape C), un polymère à base de polyazole comprend des unités d'azole récurrentes selon la formule (I) ou (II) ou (III) ou (IV) ou (V) ou (VI) ou (VII) ou (VIII) ou (IX) ou (X) ou (XI) ou (XII) ou (XIII) ou (XIV) ou (XV) ou (XVI) ou (XVII) ou (XVIII) ou (XIX) ou (XX) ou (XXI) ou (XXII)

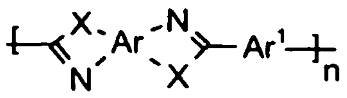

(I)

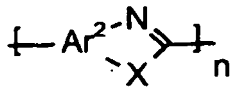

(II)

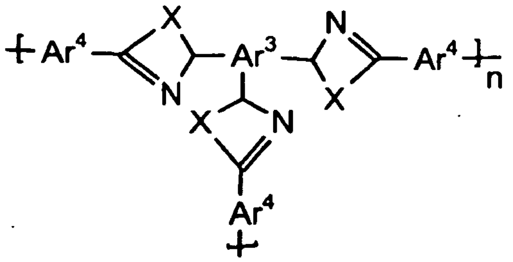

(III)

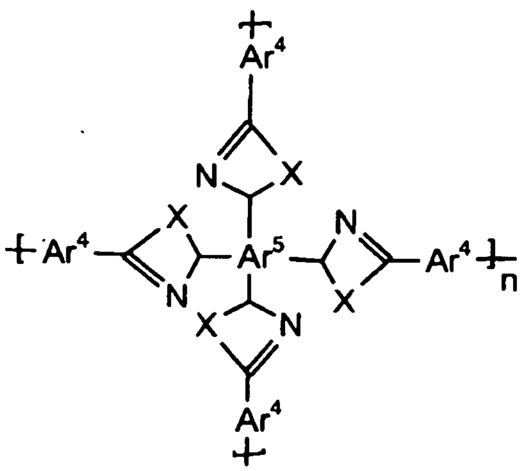

(IV)

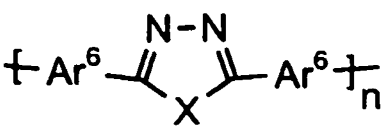

(V)

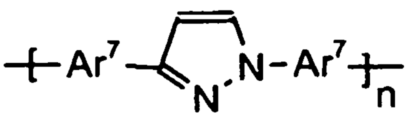

(VI)

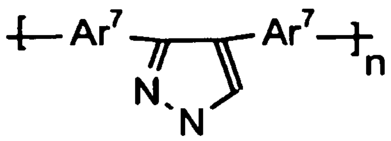

(VII)

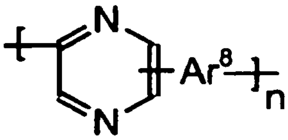

(VIII)

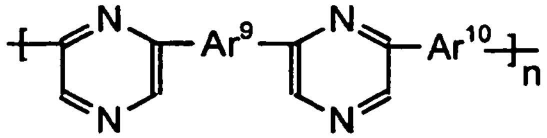

(IX)

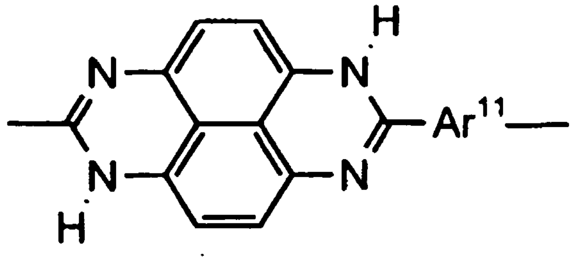

(X)

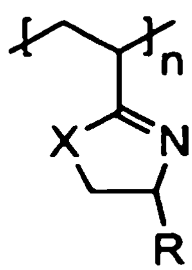

(XI)

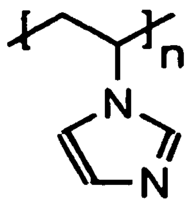

(XII)

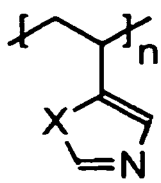

(XIII)

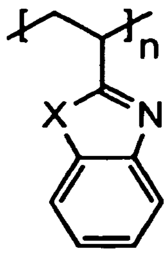

(XIV)

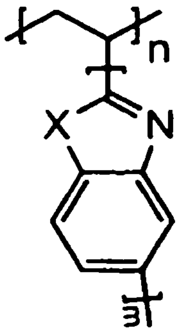

(XV)

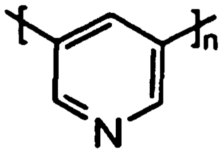

(XVI)

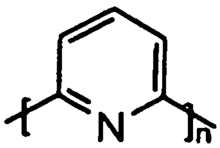

(XVII)

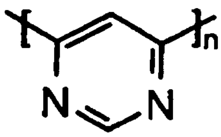

(XVIII)

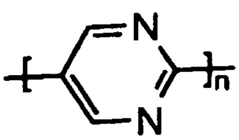

(XIX)

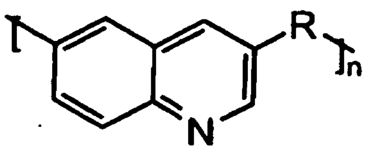

(XX)

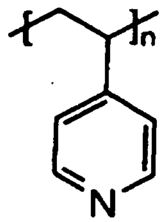

(XXI)

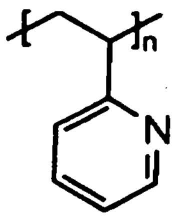

(XXII)

Ar sont semblables ou différents et pour un groupe aromatique ou hétéroaromatiques à 4 liaisons qui peut avoir un ou plusieurs noyaux,
$Ar^1$ sont semblables ou différents et pour un groupe aromatique ou hétéroaromatiques à 2 liaisons qui peuvent avoir un ou plusieurs noyaux,
$Ar^3$ sont semblables ou différents et pour un groupe aromatique ou hétéroaromatiques à 3 liaisons qui peut avoir un ou plusieurs noyaux,
$Ar^4$ sont semblables ou différents et pour un groupe aromatique ou hétéroaromatiques à 3 liaisons qui peut avoir un ou plusieurs noyaux,
$Ar^5$ sont semblables ou différents et pour un groupe aromatique ou hétéroaromatiques à 4 liaisons qui peut avoir un ou plusieurs noyaux,
$Ar^6$ sont semblables ou différents et pour un groupe aromatique ou hétéroaromatiques à 2 liaisons qui peut avoir un ou plusieurs noyaux,
$Ar^7$ sont semblables ou différents et pour un groupe aromatique ou hétéroaromatiques à 2 liaisons qui peut avoir un ou plusieurs noyaux,
$Ar^8$ sont semblables ou différents et pour un groupe aromatique ou hétéroaromatiques à 3 liaisons qui peut avoir un ou plusieurs noyaux,
$Ar^9$ sont semblables ou différents et pour un groupe aromatique ou hétéroaromatiques à 2, 3 ou 4 liaisons qui peut avoir un ou plusieurs noyaux,
$Ar^{10}$ sont semblables ou différents et pour un groupe aromatique ou hétéroaromatiques à 2 ou 3 liaisons qui peut avoir un ou plusieurs noyaux,
$Ar^{11}$ sont semblables ou différents et pour un groupe aromatique ou hétéroaromatiques à 2 liaisons qui peut avoir un ou plusieurs noyaux,
X est semblable ou différent et pour l'oxygène, le sulfure ou un groupe d'amines qui comporte comme reste supplémentaire un atome d'hydrogène, un groupe comportant de 1 à 20 atomes de carbone, de préférence un groupe akylique ou alkoxylique ramifié ou non-ramifié, ou un groupe arylique
R est semblable ou différent pour l'hydrogène, un groupe alkylique ou un groupe aromatique est en place sous réserve que R est la formule (XX) ne signifie pas d'hydrogène, et
n, m un nombre entier plus grand ou égal à 10, de préférence plus grand ou égal à 100, sera formé.

**13.** Membrane selon la revendication 1 **caractérisée en ce que**, à l'étape C), un polymère défini sera formé à partir du groupe polybenzimidazole, poly(pyridine), poly(pyrimidine), polyimidazole, polybenzthiazole, polyquinoxaline, polythiadiazole et poly(tétrazapyrène).

**14.** Membrane selon la revendication 1 **caractérisée en ce que** à l'étape C) se forme un polymère comprenant des unités de benzimidazole récurrentes de la formule

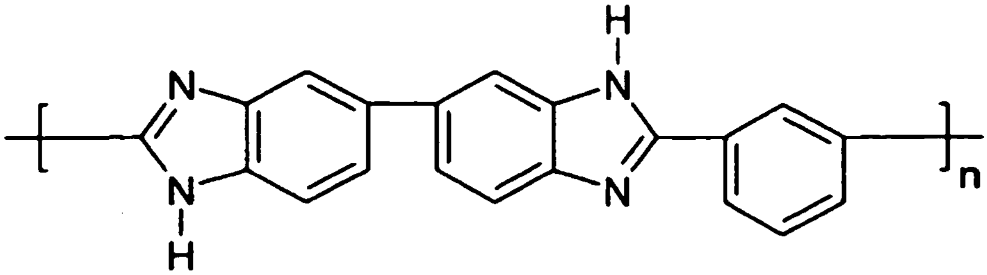

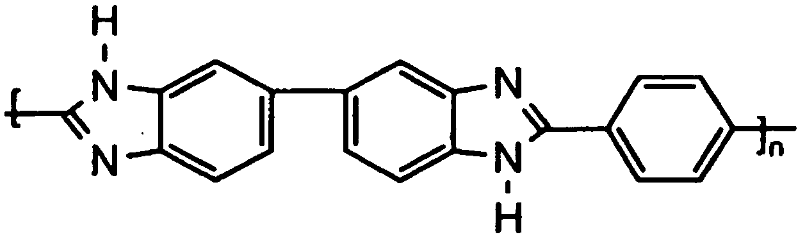

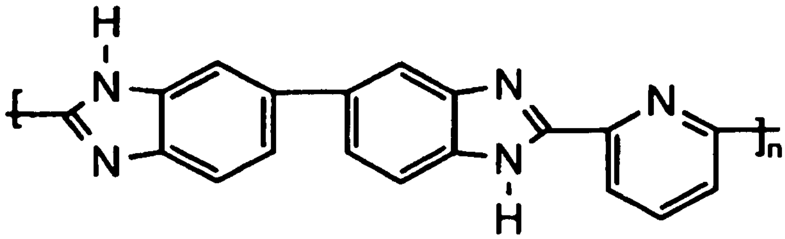

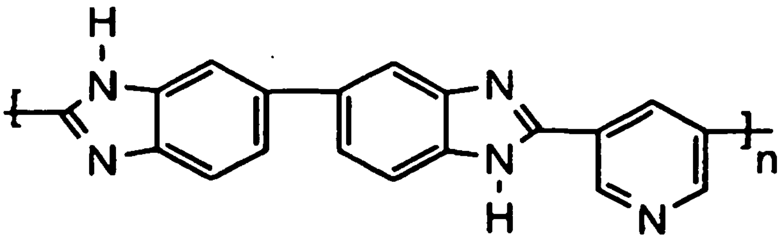

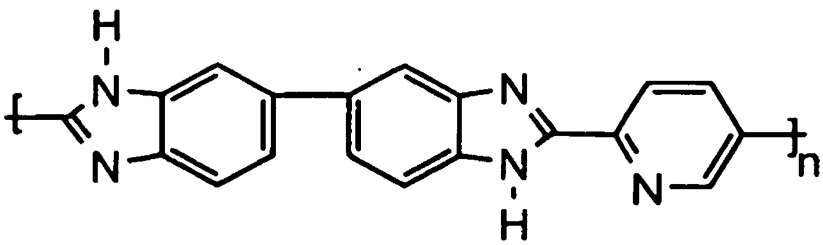

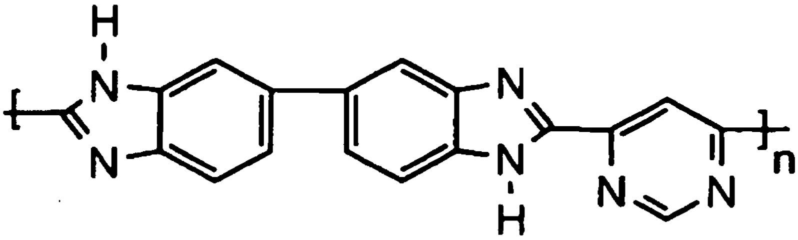

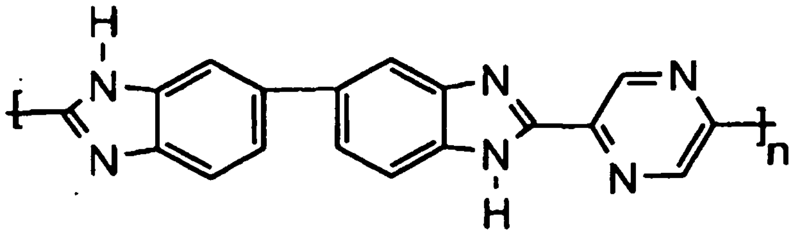

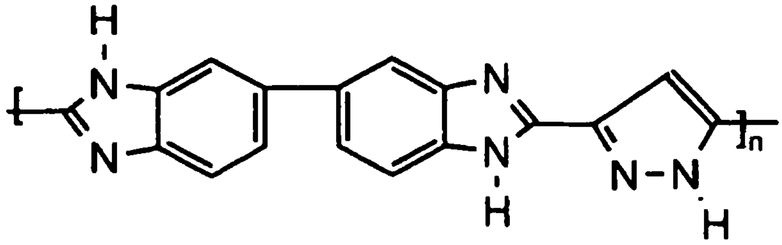

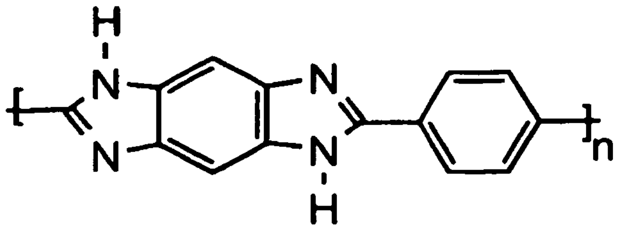

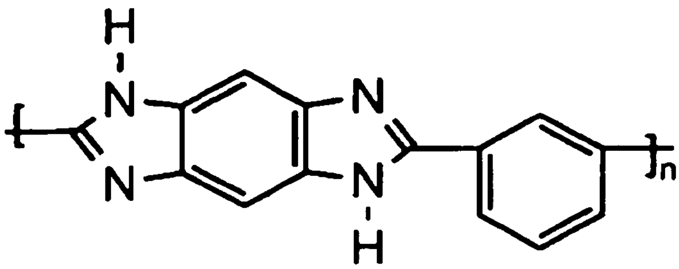

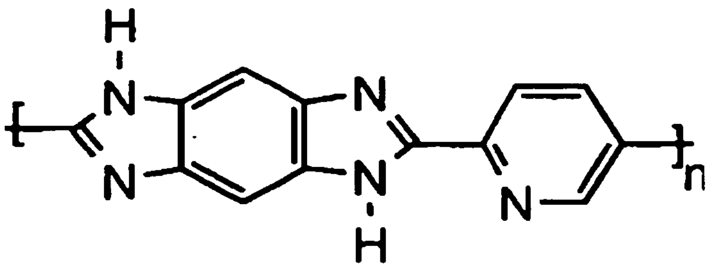

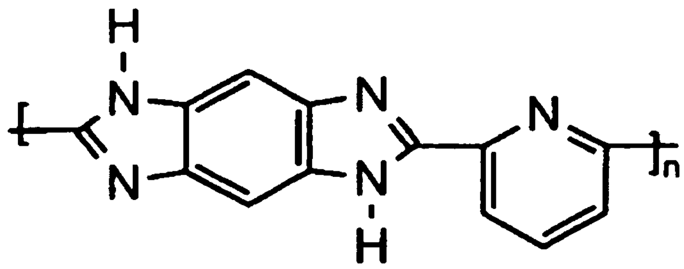

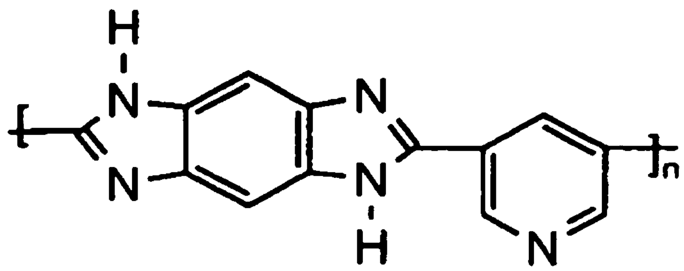

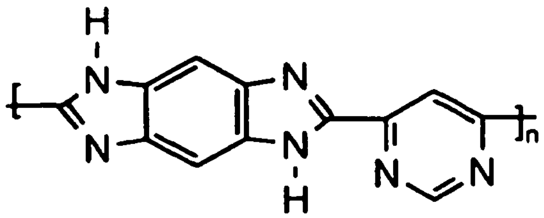

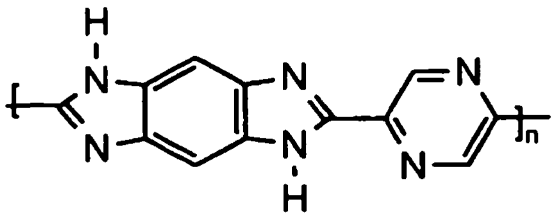

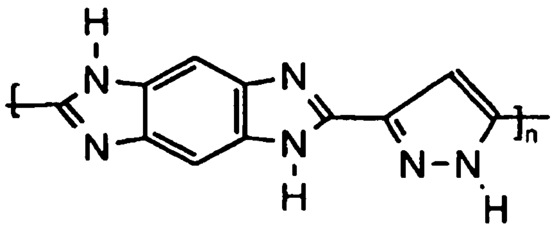

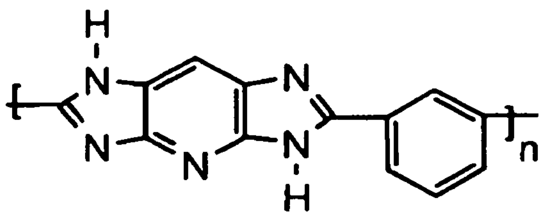

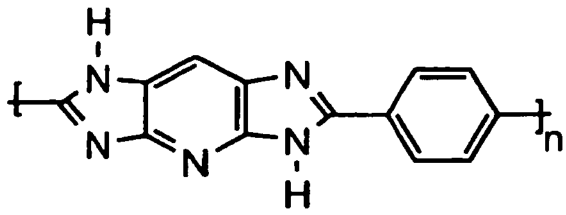

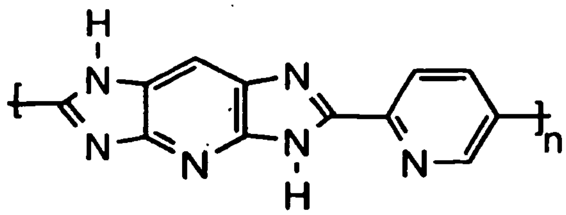

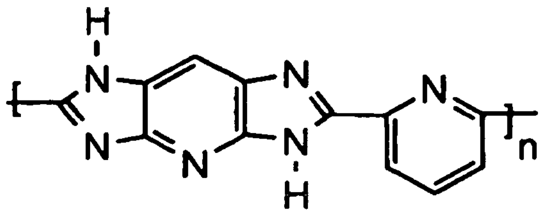

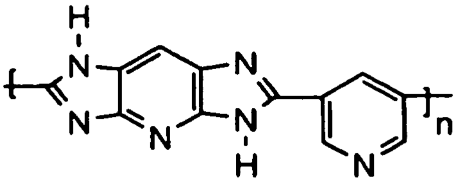

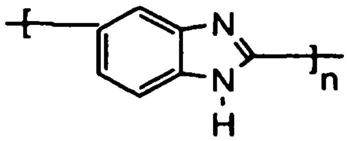

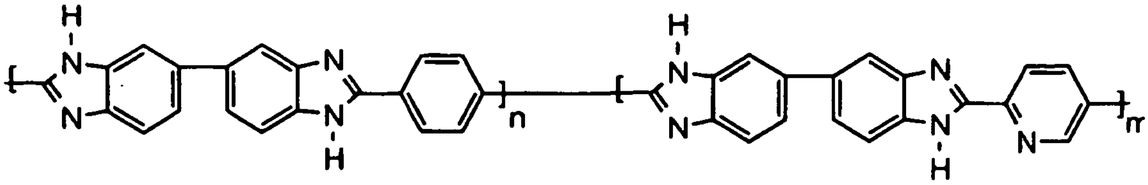

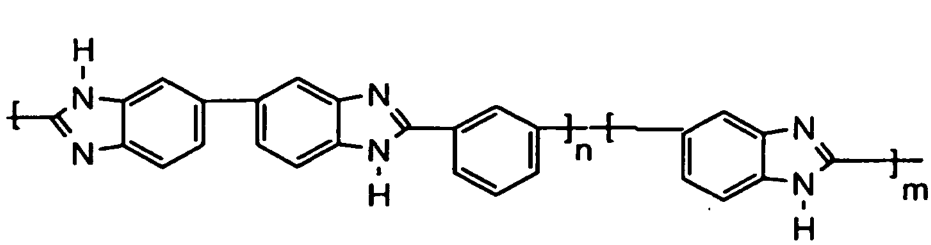

où n et m un nombre entier plus grand ou égal à 10, de préférence plus grand ou égal à 100.

**15.** Membrane selon la revendication 1 **caractérisée en ce que**, pendant ou après l'étape A), l'étape B) ou l'étape C), un autre polymère sera ajouté en tant que matériau de mélange.

**16.** Membrane selon la revendication 1 **caractérisée en ce que** la viscosité est ajustée en ajoutant de l'acide phosphorique ou des acides organo-phosphoriques après l'étape C) et avant l'étape D).

**17.** Membrane selon la revendication 1 **caractérisée en ce que** la membrane formée à l'étape E) sera traitée dans des conditions d'humidité à une température pour un certain temps jusqu'à ce que la membrane soit autoporteuse et puisse être libéré du support sans être endommagée.

**18.** Membrane selon la revendication 1 **caractérisée en ce que** le traitement de la membrane à l'étape E) n'est possible qu'à une température au-dessus de 0 °C et pouvant atteindre 150 °C, de préférence à une température entre 10°C et 120 °C, et plus particulièrement entre la température de la pièce (20 °C) et 90 °C, dans des conditions d'humidité ou en présence d'eau ou de vapeur d'eau.

**19.** Membrane selon la revendication 1 **caractérisée en ce que** le traitement de la membrane à l'étape E) dure entre 10 secondes et 300 heures, de préférence entre 1 minute et 200 heures.

**20.** Membrane selon la revendication 1 **caractérisée en ce qu'**une électrode sera sélectionné en tant que support à l'étape D) et que le traitement selon l'étape E) sera fait de telle façon que la membrane formée ne soit plus autoporteuse.

**21.** Membrane selon la revendication 1 **caractérisée en ce que** le revêtement à l'étape D) sera formé avec une épaisseur entre 20 et 4000 μm, de préférence entre 30 et 3500 μm, plus particulièrement entre 50 et 3000 μm.

**22.** Membrane selon la revendication 1 **caractérisée en ce que** la membrane formée à l'étape E) a une épaisseur située entre 15 et 3000 μm, de préférence entre 20 et 2000 μm et plus particulièrement entre 20 et 1500 μm.

**23.** Une électrode dotée d'un revêtement de polymère conducteur de proton à base de polyazoles est produit à l'aide d'un traitement comprenant les étapes :

A) Réaction d'un ou plusieurs composés de tétraamine aromatiques avec un ou plusieurs acides carboxyliques aromatiques, ou leurs esters, qui contiennent au moins deux groupes d'acides par monomère d'acide carboxylique, ou bien d'un ou plusieurs acides diaminocarboxyliques aromatiques ou hétéroaromatiques dans la masse en fusion à des températures de plus de 350 °C, préférablement de 300 °C ;
B) Dissolution du prépolymère solide obtenu tel que décrit à l'étape A) dans des hydrides d'acide phosphonique, ceux-ci ne contenant cependant pas d'acides phosphoniques vinyliques, afin de former une solution ou dispersion ;
C) Réchauffement de la solution obtenue à l'étape B) à l'aide de gaz inerte jusqu'à une température de 300 °C, préférablement de 280 °C jusqu'à la dissolution du polymère de polyazole ;
D) Formation d'une membrane en disposant la solution de polymère de polyazone obtenue à l'étape C) sur une électrode et
E) Traitement de la membrane formée à l'étape D) dans des conditions d'humidité suffisantes par lequel les hydrides d'acide phosphonique hydrolisés partiellement jusqu'à ce qu'ils forment des acides organophosphoniques ou acides phosphoriques, dans la mesure où de l'acide polyphosphorique a été utilisé, entrainent la solidification de la membrane jusqu'à ce qu'elle soit autoporteuse.

**24.** Électrode selon la revendication 23, où le revêtement a une épaisseur située entre 2 et 3000 μm, de préférence entre 3 et 2000 μm, plus particulièrement entre 5 et 1500 μm.

**25.** Une unité membrane-électrodes comprenant au moins une électrode et au moins une membrane obtenue selon une ou plusieurs des revendications 1 à 22.

**26.** Une unité membrane-électrodes comprenant au moins une électrode selon la revendication 23 et 24 et au moins une membrane selon une ou plusieurs des revendications 1 à 22.

**27.** Cellule à combustible comprenant une ou plusieurs unités membrane-électrodes telles que décrites selon les revendications 25 et 26.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 03075389 A
- WO 03074596 A
- WO 03074597 A
- WO 03096464 A
- WO 02081547 A
- WO 03022412 A
- WO 02088219 A
- US 4622276 A
- US 5599639 A
- EP 1202365 A
- DE 10109829 A
- DE 10117686 A
- DE 10117687 A
- DE 10114815 A
- DE 10213540 A
- DE 10052242
- DE 19959289 A
- US 6110616 A
- US 5422411 A
- DE 4219077 A
- WO 9601177 A
- DE 19527435 A
- JP 2001118591 A
- US 4191618 A
- US 4212714 A
- US 4333805 A


### In der Beschreibung aufgeführte Nicht-Patentliteratur


- **F. KUCERA.** *Polymer Engineering and Science,* 1988, vol. 38 (5), 783-792
- *J. Membr. Sci.,* 1993, vol. 83, 211
- **GANG, XIAO ; HJULER, H. A. ; OLSEN, C. ; BERG, R. W. ; BJERRUM, N. J.** Electrolyte additives for phosphoric acid fuel cells. *J. Electrochem. Soc.,* 1993, vol. 140 (4), 896-902
- **RAZAQ, M. ; RAZAQ, A. ; YEAGER, E. ; DESMARTEAU, DARRYL D. ; SINGH, S.** Perfluorosulfonimide as an additive in phosphoric acid fuel cell. *J. Electrochem. Soc.,* 1989, vol. 136 (2), 385-90
- **F. GUGUMUS.** Plastics Additives. Hanser Verlag, 1990
- **N.S. ALLEN ; M. EDGE.** Fundamentals of Polymer Degradation and Stability. Elsevier, 1992
- **H. ZWEIFEL.** Stabilization of Polymeric Materials. Springer, 1998